(19) Europäisches Patentamt
European Patent Office
Office européen des brevets

(11) EP 1 426 404 A1

(12) # EUROPEAN PATENT APPLICATION

published in accordance with Art. 158(3) EPC

(43) Date of publication:
**09.06.2004 Bulletin 2004/24**

(21) Application number: **02767897.8**

(22) Date of filing: **05.09.2002**

(51) Int Cl.$^7$: **C08J 7/04**, B32B 27/36, B41M 5/00

(86) International application number:
**PCT/JP2002/009028**

(87) International publication number:
**WO 2003/022913 (20.03.2003 Gazette 2003/12)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **05.09.2001 JP 2001268574**
**08.05.2002 JP 2002132432**

(71) Applicant: **Teijin Dupont Films Japan Limited**
**Tokyo 100-0011 (JP)**

(72) Inventors:
- **KUBO, K., c/o Teijin DuPont Films Japan Ltd Sagamihara-shi, Kanagawa 229-1105 (JP)**
- **KITAZAWA, S., c/o Teijin DuPont Films Japan Ltd Sagamihara-shi, Kanagawa 229-1105 (JP)**

(74) Representative: **Cockerton, Bruce Roger et al**
**Carpmaels & Ransford,**
**43-45 Bloomsbury Square**
**London WC1A 2RA (GB)**

(54) **POLYESTER FILM BEING EASY TO ADHERE TO INK RECEIVING LAYER**

(57) A polyester adhesive film readily adhering to an ink-receiving layer comprising a coating layer having a surface energy of 54 to 70 dyne/cm and a polyester film containing an ultraviolet light absorber, wherein at least one surface of the polyester film is coated with the coating layer. Accordingly, there is provided the polyester adhesive film readily adhering to an ink-receiving layer, having excellent adhesiveness to an ink-receiving layer, excellent transparency and weatherability and useful as image-receiving paper and the like for ink jet printers.

EP 1 426 404 A1

## Description

### Technical Field

The present invention relates to a polyester adhesive film readily adhering to an ink-receiving layer and having excellent weatherability.

### Background Art

Polyester films represented by a polyethylene terephthalate film have hitherto been widely used as a base film for image-receiving paper.

A novel printing system such as an ink jet method has recently been developed according to demands of color printers. It is necessary to form an ink-receiving layer on a film as proposed in JP-A 64-36479 and JP-A 1-95091 (hereunder, JP-A means "Japanese Unexamined Patent Publication") in image-receiving films of the printing method. A porous material having good ink absorptivity is used in an ink-receiving layer; however, the adhesiveness of an ink-receiving layer to a polyester film used as the base film is poor.

Therefore, a number of methods have been proposed for providing a coating layer for enhancing the adhesiveness to an ink-receiving layer on the surface of a film for the purpose of improving the adhesiveness to an ink-receiving layer. Since any films are inferior in weatherability, deterioration of the film, discoloration of an ink and the like are caused and the films do not withstand long-term uses when the films are used outdoors such as commercial large-sized posters.

### Disclosure of the Invention

It is an object of the present invention to provide a polyester adhesive film readily adhering to an ink-receiving layer and having excellent adhesiveness to an ink-receiving layer, excellent transparency and weatherability and useful as image-receiving paper for ink jet printers.

The present invention is composed of the following item 1 and includes items 2 to 10 as preferred modes.

Item 1. A polyester adhesive film readily adhering to an ink-receiving layer comprising a coating layer having a surface energy of 50 to 70 dyne/cm and a polyester film containing an ultraviolet light absorber, wherein at least one surface of the polyester film is coated with the coating layer.

Item 2. The polyester adhesive film readily adhering to an ink-receiving layer according to item 1, wherein the coating layer of the polyester adhesive film is composed of a composition comprising, per 100% by weight of the composition, (B) 10 to 30% by weight of (B1) a polyvinyl alcohol and/or (B2) a polyalkylene oxide having a number-average molecular weight of 600 to 2000 and (C) 3 to 25% by weight of fine particles having an average particle diameter of 20 to 80 nm.

Item 3. The polyester adhesive film readily adhering to an ink-receiving layer according to item 2, wherein the coating layer of the polyester adhesive film comprises, per 100% by weight of the composition, (A) 50 to 80% by weight of a copolyester in which the ratio a dicarboxylic acid component having a sulfonate group is 1 to 16 mol% based on the whole acid component and the second order transition point of the polymer is 20 to 90 °C.

Item 4. The polyester adhesive film readily adhering to an ink-receiving layer according to item 2, wherein the coating layer of the polyester adhesive film comprises, per 100% by weight of the composition, (D) 1 to 20% by weight of a cross-linking agent.

Item 5. The polyester adhesive film readily adhering to an ink-receiving layer according to item 2, wherein a cross-linking agent (D) is at least one kind selected from the group consisting of oxazoline group-containing polymers, urea resins, melamine resins and epoxy resins.

Item 6. The polyester adhesive film readily adhering to an ink-receiving layer according to item 1, wherein the surface energy of the coating layer is 54 to 70 dyne/cm.

Item 7. The polyester adhesive film readily adhering to an ink-receiving layer according to item 2, wherein the saponification degree of the polyvinyl alcohol (B1) is 74 to 90 mol%.

Item 8. The polyester adhesive film readily adhering to an ink-receiving layer according to item 7, wherein the polyvinyl alcohol (B1) is modified with a carboxylic acid.

Item 9. The polyester adhesive film readily adhering to an ink-receiving layer according to item 1, wherein the haze is less than 5%.

Item 10. The polyester adhesive film readily adhering to an ink-receiving layer according to item 1, wherein the center line average height Ra of the surface of the coating layer is within the range of 2 to 40 nm.

Item 11. The polyester adhesive film readily adhering to an ink-receiving layer according to item 1, wherein the

ultraviolet light absorber is at least one kind of compound selected from a cyclic iminoester represented by the following formula (I):

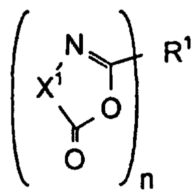

• • • (I)

wherein, $X^1$ is a bivalent aromatic residue in which two bonds from $X^1$ represented by the above formula are in a positional relationship of the 1-and the 2-positions; n is 1, 2 or 3; $R^1$ is an n-valent hydrocarbon residue and may further contain a heteroatom or $R^1$ may be a direct bond linkage when n is 2, and
a cyclic iminoester represented by the following formula (II):

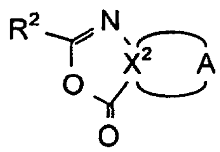

• • • (II)

wherein, A is a group represented by the following formula (II)-a:

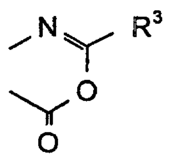

• • • (II) -a

or a group represented by the following formula (II)-b:

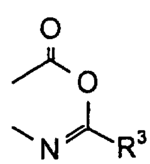

• • • (II) -b

wherein $R^2$ and $R^3$ are the same or different and are each a monovalent hydrocarbon residue; and $X^2$ is a tetravalent aromatic residue which may further contain a heteroatom.
Item 12. The polyester adhesive film readily adhering to an ink-receiving layer according to item 1, which is used as image-receiving paper for ink jet printers.

The present invention will be explained in detail hereinafter.

<Polyester film>

<Polyester>

An aromatic polyester composed of an aromatic dicarboxylic acid component, for example terephthalic acid, isophthalic acid, 2,6-naphthalenedicarboxylic acid or 4,4'-diphenyldicarboxylic acid and a glycol component, for example ethylene glycol, 1,4-butanediol, 1,4-cyclohexanedimethanol or 1,6-hexanediol is preferable as the polyester constituting the polyester film in the present invention. Polyethylene terephthalate and polyethylene 2,6-naphthalenedicarboxylate are especially preferable. A copolymer polyester of the above components and the like may be used.

Organic or inorganic fine particles as a lubricant, if necessary, are preferably contained in the polyester so as to improve windability of the film during the film formation and transportability of the film when coated with an ink-receiving layer or the like. Examples of the fine particles include calcium carbonate, calcium oxide, aluminum oxide, kaolin, silicon oxide, zinc oxide, cross-linked acrylic resin particles, cross-linked polystyrene resin particles, urea resin particles, melamine resin particles and cross-linked silicone resin particles. Besides the fine particles, a colorant, an antistatic agent, an antioxidant, a lubricant, a catalyst and other resins such as polyethylene, polypropylene, an ethylene-propylene polymer or an olefinic ionomer can optionally be contained within the range without deteriorating transparency.

<Ultraviolet light absorber>

In order to improve the weatherability of the film, it is necessary to include an ultraviolet light absorber in the polyester constituting the polyester film in the present invention. At least one kind of compound selected from a cyclic iminoester represented by the following formula (I):

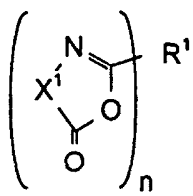

· · · (I)

wherein, $X^1$ is a bivalent aromatic residue in which two bonds from $X^1$ represented by the above formula are in a positional relationship of the 1-and the 2-positions; n is 1, 2 or 3; $R^1$ is an n-valent hydrocarbon residue and may further contain a heteroatom or $R^1$ may be a direct bond linkage when n is 2, and
a cyclic iminoester represented by the following formula (II):

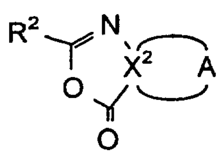

· · · (II)

wherein, A is a group represented by the following formula (II)-a:

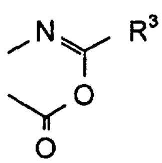

· · · (II) -a

or a group represented by the following formula (II)-b:

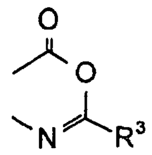

・・・(II) -b

where $R^2$ and $R^3$ are the same or different and are each a monovalent hydrocarbon residue; and $X^2$ is a tetravalent aromatic residue which may further contain a heteroatom,

is preferably used as the ultraviolet light absorber and the compound is especially preferably used in an unreactive form.

The cyclic iminoester is a known compound as the ultraviolet light absorber and is described in, for example JP-A 59-12952.

In the above general formula (I), $X^1$ is a bivalent aromatic residue in which two bonds from $X^1$ represented by formula (I) are in a positional relationship of the 1- and the 2-positions; n is 1, 2 or 3; $R^1$ is an n-valent hydrocarbon residue and may further contain a heteroatom or $R^1$ may be a direct bond linkage when n is 2.

Examples of $X^1$ preferably include 1,2-phenylene, 1,2-naphthylene, 2,3-naphthylene or a group represented by the following formula:

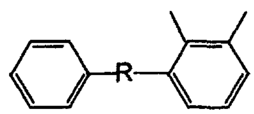

・・・(a)

or

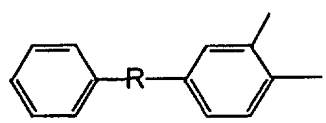

・・・(b)

wherein, R is -O-, -CO-, -S-, $-SO_2-$, $-CH_2-$, $-(CH_2)-$ or $-C(CH_3)_2-$. Among them, 1,2-phenylene is especially preferable.

The aromatic residue exemplified in $X^1$ may be substituted with a substituent such as a $C_{1-10}$ alkyl, for example methyl, ethyl, propyl, hexyl or decyl; a $C_{6-12}$ aryl, for example phenyl or naphthyl; a $C_{5-12}$ cycloalkyl, for example cyclopentyl or cyclohexyl; an $C_{8-20}$ aralkyl, for example phenylethyl; a $C_{1-10}$ alkoxy, for example methoxy, ethoxy or decyloxy; nitro; a halogen, for example chlorine or bromine; a $C_{2-10}$ acyl, for example acetyl, proponyl, benzoyl or decanoyl.

$R^1$ may be an n-valent hydrocarbon residue (with the proviso that n is 1, 2 or 3) or a direct bond linkage only when n is 2.

Examples of the monovalent hydrocarbon residue (when n is 1) include first a $C_{1-10}$ unsubstituted aliphatic group, a $C_{6-12}$ unsubstituted aromatic group or a $C_{5-12}$ unsubstituted alicyclic group.

Examples of the $C_{1-10}$ unsubstituted aliphatic group include methyl, ethyl, propyl, hexyl or decyl and examples of the $C_{6-12}$ unsubstituted aromatic group include phenyl, naphthyl or biphenyl. Examples of the $C_{5-12}$ unsubstituted alicyclic group include cyclopentyl or cyclohexyl.

Examples of the above monovalent hydrocarbon residue include secondly a group represented by the following formula (c):

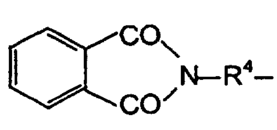

・・・(c)

wherein, $R^4$ is a $C_{2-10}$ alkylene, phenylene or naphthylene, a group represented by the following formula (d):

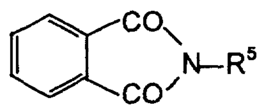

・・・(d)

wherein, $R^5$ is a $C_{1-10}$ alkyl group, phenyl group or naphthyl group, a group represented by the following formula (e):

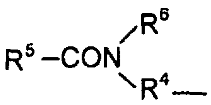

・・・(e)

wherein, $R^4$ and $R^5$ are each the same as defined above; and $R^6$ is either a hydrogen atom or a group defined in $R^5$, or a substituted aliphatic residue or an aromatic residue represented by the following formula (f):

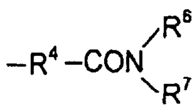

・・・(f)

wherein, $R^4$ and $R^6$ are each the same as defined above; and $R^7$ is either hydrogen atom or a group as defined in $R^5$.

Examples of the above monovalent hydrocarbon residue include thirdly the above unsubstituted aromatic residue substituted with the same substituent exemplified as the substituent of the aromatic residue represented by $X^1$. Examples of the case where the unsubstituted aromatic residue substituted with the substituent include tolyl, methylnaphthyl, nitrophenyl, nitronaphthyl, chlorophenyl, benzoylphenyl, acetylphenyl or acetylnaphthyl.

Examples of the monovalent hydrocarbon residue are preferably the group represented by the above formula (c), (d), (e) or (f), i.e. an aliphatic residue or an aromatic residue, among them, especially a substituted aromatic residue.

Examples of the bivalent hydrocarbon residue (when n is 2) include first a bivalent $C_{2-10}$ unsubstituted aliphatic residue, a bivalent $C_{6-12}$ unsubstituted aromatic residue or a bivalent $C_{5-12}$ unsubstituted alicyclic residue.

Examples of the bivalent $C_{2-10}$ unsubstituted aliphatic group include ethylene, trimethylene, tetramethylene or decamethylene and examples of the bivalent $C_{6-12}$ unsubstituted aromatic residue include phenylene, naphthylene or p,p'-biphenylene. Examples of the bivalent $C_{5-12}$ unsubstituted alicyclic residue include cyclopentylene or cyclohexylene.

Examples of the above bivalent hydrocarbon residue include secondly a group represented by the following formula (g):

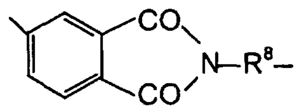

・・・(g)

wherein, $R^8$ is any of groups as defined in $R^4$, or

a substituted aliphatic residue or aromatic residue represented by the following formula (h):

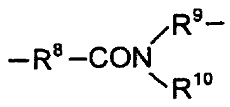

· · · (h)

wherein, $R^8$ is the same as defined above; $R^9$ is any of the groups as defined in $R^4$; and $R^{10}$ is any of the groups as defined in $R^6$.

Examples of the above bivalent hydrocarbon residue include thirdly the unsubstituted bivalent aromatic residue substituted with the same substituent exemplified as the substituent of the aromatic group represented by $X^1$.

When n is 2, examples of $R^1$ include preferably the direct bond linkage or the unsubstituted or substituted bivalent aromatic hydrocarbon residues of the first to the third groups, particularly preferably the unsubstituted or substituted aromatic hydrocarbon residue of the first or third group in which two bonds are extended from the most distant positions, especially preferably p-phenylene, p,p'-biphenylene or 2,6-naphthylene.

Examples of the trivalent hydrocarbon residue (when n is 3) include a trivalent $C_{6-12}$ aromatic residue.

Examples of the aromatic residue include the following:

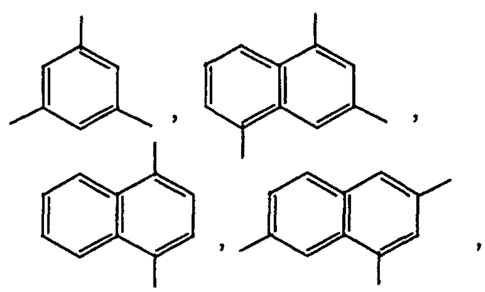

The aromatic residues may be substituted with the same substituent exemplified as the substituent of the above monovalent aromatic residue.

In the above general formula (I), $R^2$ and $R^3$ are each the same or different and a monovalent hydrocarbon residue; and $X^2$ is a tetravalent aromatic hydrocarbon residue.

Examples of $R^2$ and $R^3$ include the same group as exemplified in $R^1$ when n is 1 in the explanation of the above formula (I)..

Examples of the tetravalent aromatic hydrocarbon residue include groups represented by

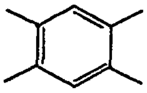, 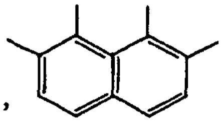,

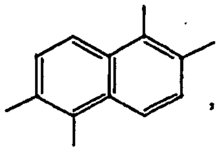, 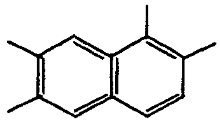,

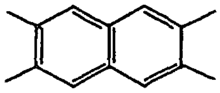,

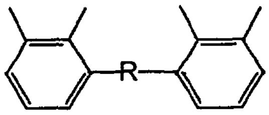, 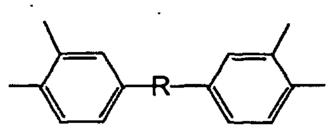,

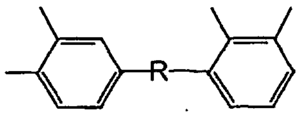

wherein, R is as defined in the formula (a).

Examples of the above tetravalent aromatic residue may be substituted with the same substituent exemplified as a substituent of the monovalent aromatic residue represented by $R^1$ in the explanation of the above formula (I).

Specific examples of the cyclic iminoesters represented by the above formulae (I) and (II) used in the present invention include the following compounds:

<u>Compounds represented by the above formula (I)</u>

<u>Compounds when n is 1</u>

2-Methyl-3,1-benzoxazin-4-one, 2-butyl-3,1-benzoxazin-4-one, 2-phenyl-3,1-benzoxazin-4-one, 2-(1- or 2-naphthyl)-3,1-benzoxazin-4-one, 2-(4-biphenyl)-3,1-benzoxazin-4-one, 2-p-nitrophenyl-3,1-benzoxazin-4-one, 2-m-nitrophenyl-3,1-benzoxazin-4-one, 2-p-benzoylphenyl-3,1-benzoxazin-4-one, 2-p-methoxyphenyl-3,1-benzoxazin-4-one, 2-o-methoxyphenyl-3,1-benzoxazin-4-one, 2-cyclohexyl-3,1-benzoxazin-4-one, 2-p-(or m-)phthalimidophenyl-3,1-benzoxazin-4-one, N-phenyl-4-(3,1-benzoxazin-4-on-2-yl)phthalimide, N-benzoyl-4-(3,1-benzoxazin-4-on-2-yl) aniline, N-benzoyl-N-methyl-4-(3,1-benzoxazin-4-on-2-yl)aniline and 2-(p-(N-methylcarbonyl)phenyl)-3,1-benzoxazin-4-one.

<u>Compounds when n is 2</u>

2,2'-Bis(3,1-benzoxazin-4-one), 2,2'-ethylenebis(3,1-benzoxazin-4-one), 2,2'-tetramethylenebis(3,1-benzoxazin-4-one), 2,2'-decamethylenebis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6- or 1,5-naphthylene)bis (3,1-benzoxazin-4-one), 2,2'-(2-methyl-p-phenylene)bis(3,1-benzoxazin-4-one), 2,2'-(2-nitro-p-phenylene)bis (3,1-benzoxazin-4-one), 2,2'-(2-chloro-p-phenylene)bis(3,1-benzoxazin-4-one), 2,2'-(1,4-cyclohexylene)bis(3,1-benzoxazin-4-one), N-p-(3,1-benzoxazin-4-on-2-yl)phenyl, 4-(3,1-benzoxazin-4-on-2-yl)phthalimide, N-p-(3,1-benzoxazin-4-on-2-yl)benzoyl and 4-(3,1-benzoxazin-4-on-2-yl)aniline.

<u>Compounds when n is 3</u>

1,3,5-Tri(3,1-benzoxazin-4-on-2-yl)benzene, 1,3,5-tri(3,1-benzoxazin-4-on-2-yl)naphthalene and 2,4,6-tri (3,1-benzoxazin-4-on-2-yl)naphthalene.

Compounds represented by the above formula (II)

2,8-Dimethyl-4H,6H- benzo(1,2-d;5,4-d')bis(1,3)-oxazine-4,6-dione, 2,7-dimethyl-4H,9H-benzo(1,2-d;4,5-d')bis(1,3)-oxazine-4,9-dione, 2,8-diphenyl-4H,8H-benzo(1,2-d;5,4-d')bis(1,3)-oxazine-4,6-dione, 2,7-diphenyl-4H,9H-benzo(1,2-d;4,5-d')bis(1,3)-oxazine-4,6-dione, 6,6'-bis(2-methyl-4H,3,1-benzoxazin-4-one), 6,6'-bis(2-ethyl-4H,3,1-benzoxazin-4-one), 6,6'-bis(2-phenyl-4H,3,1-benzoxazin-4-one), 6,6'-methylenebis(2-methyl-4H,3,1-benzoxazin-4-one), 6,6'-methylenebis(2-phenyl-4H,3,1-benzoxazin-4-one), 6,6'-ethylenebis(2-methyl-4H,3,1-benzoxazin-4-one), 6,6'-ethylenebis(2-phenyl-4H,3,1-benzoxazin-4-one), 6,6'-butylenebis(2-methyl-4H,3,1-benzoxazin-4-one), 6,6'-butylenebis(2-phenyl-4H,3,1-benzoxazin-4-one), 6,6'-oxybis(2-methyl-4H,3,1-benzoxazin-4-one), 6,6'-oxybis(2-phenyl-4H,3,1-benzoxazin-4-one), 6,6'-sulfonylbis(2-methyl-4H,3,1-benzoxazin-4-one), 6,6'-sulfonylbis(2-phenyl-4H,3,1-benzoxazin-4-one), 6,6'-carbonylbis(2-methyl-4H,3,1-benzoxazin-4-one), 6,6'-carbonylbis(2-phenyl-4H,3,1-benzoxazin-4-one), 7,7'-methylenebis(2-methyl-4H,3,1-benzoxazin-4-one), 7,7'-methylenebis(2-phenyl-4H,3,1-benzoxazin-4-one), 7,7'-bis(2-methyl-4H,3,1-benzoxazin-4-one), 7,7'-ethylenebis(2-methyl-4H,3,1-benzoxazin-4-one), 7,7'-oxybis(2-methyl-4H,3,1-benzoxazin-4-one), 7,7'-sulfonylbis(2-methyl-4H,3,1-benzoxain-4-one), 7,7'-carbonylbis(2-methyl-4H,3,1-benzoxazin-4-one), 6,7'-bis(2-methyl-4H,3,1-benzoxazin-4-one), 6,7'-bis(2-phenyl-4H, 3,1-benzoxazin-4-one), 6,7'-methylenebis(2-methyl-4H,3,1-benzoxazin-4-one) and 6,7'-methylenebis(2-phenyl-4H,3,1-benzoxazin-4-one).

Among the exemplified compounds, compounds represented by the above formula (I), more preferably the compounds represented by the above formula (I) when n is 2, especially preferably the compounds represented by the following formula (I)-1:

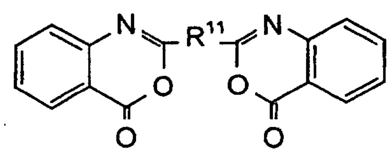

・・・(I)・1

wherein, $R^{11}$ is a bivalent aromatic hydrocarbon residue,
are advantageously used.

2,2'-p-Phenylenebis(3,1-benzoxazin-4-one), 2,2'-(4,4'-diphenylene)bis(3,1-benzoxazin-4-one) and 2,2'-(2,6-naphthylene)bis(3,1-benzoxazin-4-one) are especially preferable as the compounds represented by formula (I)-1.

Ultraviolet absorption characteristics of the cyclic iminoesters, for example the representative compounds thereof are described in JP-A 59-12952 and are thereby quoted.

The cyclic iminoester has excellent compatibility with the polyester, but has an ability to react with terminal hydroxyl groups of the polyester as described in JP-A 59-12592 and United States Patent 4291152. Thereby, it is necessary to carefully mix the cyclic iminoester with the polyester so that the iminoester is contained in a substantially unreactive state. When the polyester in which terminal groups in a main proportion are carboxyl groups or the polyester in which terminal hydroxyl groups are blocked with a terminal blocking agent unreactive with the cyclic iminoester is used, there is no need for paying special attention to the production of compositions containing the cyclic iminoester in the unreactive state. When the polyester in which hydroxyl groups are contained in a main proportion to terminal groups is used, melt mixing is preferably completed in a short time so as to satisfy the following formulae:

$$\mathrm{Log}t \leqq -0.008T+4.8$$

and

$$Tm<T<320$$

wherein, t is the melt mixing time (seconds); T is the melt mixing temperature (°C); and Tm is the melt temperature (°C) of the polyester. In this case, there is a possibility of reacting the cyclic iminoester with the polyester in a slight ratio; however, the molecular weight of the polyester is increased by the reaction. Thereby, the lowering of the molecular weight by deterioration of the polyester with a visible light absorber can be prevented depending on the ratio. When

the cyclic iminoester is reacted with the polyester, the ultraviolet absorption wavelength region usually shows a tendency to shift from the ultraviolet absorption wavelength region in the unreactive state to the side of a lower wavelength and further has a tendency to transmit ultraviolet rays on the higher wavelength side.

When an adequate amount of the cyclic iminoester is added, the cyclic iminoester has excellent characteristics of slightly staining the surroundings of a die due to almost no sublimate and preventing deterioration of the ultraviolet light absorber or film without discoloration of the film due to absorption of rays of light at about 380 nm from the ultraviolet rays.

The content of the ultraviolet light absorber is preferably 0.1 to 5% by weight, more preferably 0.2 to 3% by weight based on 100% by weight of the polyester in the film. When the content is less than 0.1% by weight, preventing effects on ultraviolet deterioration are slight. On the other hand, when the content exceeds 5% by weight, it is unfavorable because film-forming characteristics of the polyester are lowered.

The method for adding the ultraviolet light absorber to the polyesters is not especially limited; however, incorporation into a polyester polymerizing step or a melting step before film formation, impregnation into a biaxially oriented film and the like can be cited. The incorporation of the ultraviolet light absorber in the polymer in the melting step before the film formation is preferable even from the viewpoint that lowering of degree of polymerization of the polyester is prevented. In the process, the incorporation of the ultraviolet light absorber can be carried out by a method for direct addition of a compound powder, a masterbatch method and the like.

<Heat shrinkage percentage of film>

The polyester film in the present invention has preferably a heat shrinkage percentage of 1% or less when the polyester film is maintained at 150 °C for 30 minutes. When the heat shrinkage percentage is within the range, the dimensional stability is good and shift and the like of prints can be suppressed when the polyester film is used as image-receiving paper. The polyester film having the heat shrinkage percentage can be obtained by raising the density of the film, for example heat setting or heat treatment at a temperature not lower than the Tg of the polyester after the biaxial orientation, for example increasing the density of the film to 1.390 g/cm$^3$ or above in the case of a polyethylene terephthalate film.

<Coating layer>

At least one surface of the polyester film in the present invention is coated with a coating layer. The surface energy of the coating layer is 50 to 70 dyne/cm.

The coating layer is composed of a composition comprising, per 100% by weight of the composition, (B) 10 to 30% by weight of (B1) a polyvinyl alcohol and/or (B2) a polyalkylene oxide having a number-average molecular weight of 600 to 2000 and (C) 3 to 25% by weight of fine particles having an average particle diameter of 20 to 80 nm.

The coating layer preferably comprises, per 100% by weight of the composition, (A) 50 to 80% by weight of a copolyester in which the ratio of a dicarboxylic acid component having a sulfonate group is 1 to 16 mol% based on the whole acid component and the second order transition point of the polymer is 20 to 90 °C.

The coating layer preferably comprises, per 100% by weight of the composition, (D) 1 to 20% by weight of a cross-linking agent.

Thereby, the coating layer is preferably composed of the composition comprising, per 100% by weight of the composition, (A) 50 to 80% by weight of the copolyester in which the ratio of the dicarboxylic acid component having the sulfonate group is 1 to 16 mol% based on the whole acid component, (B) 10 to 30% by weight of (B1) the polyvinyl alcohol and/or (B2) the polyalkylene oxide having a number-average molecular weight of 600 to 2000, (C) 3 to 25% by weight of the fine particles having an average particle diameter of 20 to 80 nm and (D) 1 to 20% by weight of the cross-linking agent.

Components constituting the coating layer will be explained in detail hereinafter.

<Copolyester (A)>

When the copolyester (A) is used as the component constituting the coating layer, the copolyester (A) is a copolyester in which the ratio of the dicarboxylic acid component having the sulfonate group is 1 to 16 mol% based on the whole acid component in the molecule. The copolyester is a copolyester composed of a carboxylic acid component such as terephthalic acid, isophthalic acid, 2,6-naphthalenedicarboxylic acid, hexahydroterephthalic acid, 4,4'-diphenyldicarboxylic acid, phenylindanedicarboxylic acid, adipic acid, sebacic acid, 5-sulfoisophthalic acid, trimellitic acid or dimethylolpropionic acid, a dicarboxylic acid component such as 5-sodium sulfoisophthalic acid, 5-potassium sulfoisophthalic acid or 5-potassium sulfoterephthalic acid, a hydroxy compound component such as ethylene glycol, diethylene glycol, neopentylene glycol, 1,4-butanediol, 1,6-hexanediol, 1,4-cyclohexanedimethanol, glycerol, trimethylolpropane and alkylene oxide adduct of bisphenol A and is used as an aqueous solution, an aqueous dispersion or an emulsion.

In the copolyester (A), it is necessary that the amount of the dicarboxylic acid component having the sulfonate group in order to impart hydrophilicity is 1 to 16 mol%, preferably 5 to 15 mol% based on the whole acid component in the molecule. When the amount of the dicarboxylic acid component having the sulfonate group is less than 1 mol%, the hydrophilicity of the copolyester is insufficient. On the other hand, the amount exceeds 16 mol%, it is undesirable because the moisture resistance of the coating layer is lowered.

It is necessary that the second order transition point (Tg) of the copolyester (A) is 20 to 90 °C, preferably 30 to 70 °C. When the Tg is lower than 20 °C, the film is readily blocked. On the other hand, when Tg exceeds 90 °C , it is undesirable because the abrasion property and adhesiveness of the film are lowered.

<Polyvinyl alcohol (B1) >

When the polyvinyl alcohol (B1) is used as a component constituting the coating layer, the saponification degree of the polyvinyl alcohol (B1) is preferably 74 to 90 mol%. When the saponification degree is less than 74 mol%, moisture resistance of the coating layer is lowered. On the other hand, when the saponification degree exceeds 90 mol%, it is undesirable because the adhesiveness to an ink-receiving layer is lowered. The polyvinyl alcohol (B1) is more preferably a carboxylic acid-modified polyvinyl alcohol.

<Polyalkylene oxide (B2)>

When the polyalkylene oxide (B2) is used as the component constituting the coating layer, polyethylene oxide, polypropylene oxide and polyethylene-propylene oxide can preferably be cited as the polyalkylene oxide (B2).

As for the molecular weight of the polyalkylene oxide (B), it is necessary that the number-average molecular weight is 600 to 2000. When the molecular weight is less than 600, the blocking tendency and moisture resistance of the coating layer are lowered. On the other hand, when the number-average molecular weight exceeds 2000, the adhesiveness to an ink-receiving layer is lowered.

<Fine particles (C)>

The fine particles (C) used as the component constituting the coating layer are organic or inorganic fine particles having an average particle diameter of 20 to 80 nm. Examples of the fine particles include calcium carbonate, calcium oxide, aluminum oxide, kaolin, silicon oxide, zinc oxide, cross-linked acrylic resin particles, cross-linked polystyrene resin particles, melamine resin particles and cross-linked silicone resin particles. When the average particle diameter of the fine particles is less than 20 nm, the film is readily blocked. On the other hand, when the average particle exceeds 80 nm, the abrasion property is lowered.

<Cross-linking agent (D) >

When the cross-linking agent (D) is used as the component constituting the coating layer, examples of the cross-linking agent (D) to be used include an oxazoline group-containing polymer, a urea resin, a melamine resin and an epoxy resin.

The polymers described in JP-B 63-48884 (hereafter, JP-B means "Japanese Examined Patent Publication"), JP-A 2-60941, JP-A 2-99537 and the like or polymers corresponding thereto can be used as the oxazoline group-containing polymer. Specifically, polymers obtained by polymerizing an addition polymerizable oxazoline (a) represented by the following formula (III) and, if necessary, other monomers (b) are cited.

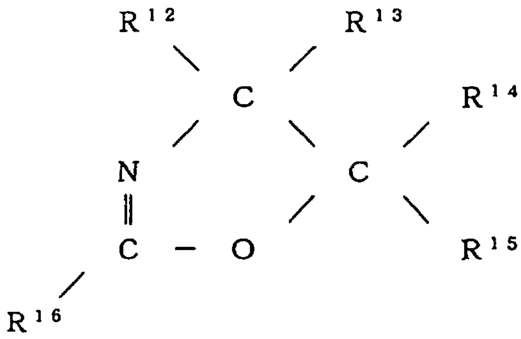

(III)

wherein, $R^{12}$, $R^{13}$, $R^{14}$ and $R^{15}$ represent each a substituent selected from a hydrogen, a halogen, an alkyl group, an aralkyl group, a phenyl group and a substituted phenyl group; and $R^{16}$ represents an acyclic organic group having an addition polymerizable unsaturated bond group.

Specific examples of the addition polymerizable oxazoline (a) represented by the above formula (III) include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline and the like. The oxazolines can be used as one kind or a mixture of two or more kinds. Among them, 2-isopropenyl-2-oxazoline is industrially readily available and suitable.

The monomers (b) other than the addition polymerizable oxazoline are not especially limited if the monomers (b) are those copolymerizable with the addition polymerizable oxazoline (a), and examples thereof include acrylic esters such as methyl acrylate, methyl methacrylate, butyl acrylate or butyl methacrylate; unsaturated carboxylic acids such as acrylic acid, methacrylic acid or itaconic acid; unsaturated nitriles such as acrylonitrile or methacrylonitrile; unsaturated amides such as acrylamide, methacrylamide, N-methylolacrylamide or N-methylolmethacrylamide; vinyl esters such as vinyl acetate or vinyl propionate; vinyl ethers such as methyl vinyl ether or ethyl vinyl ether; α-olefins such as ethylene or propylene; halogen-containing a, β-unsaturated monomers such as vinyl chloride, vinylidene chloride or vinyl fluoride; α,β-unsaturated aromatic monomers such as styrene or α-methylstyrene and the like. The monomers can be used as one kind or a mixture of two or more kinds.

In order to obtain a polymer by using the addition polymerizable oxazoline (a) and, if necessary, at least one or more kinds of the other monomers (b), polymerization can be carried out according to a conventionally known method for the polymerization. For example, various kinds of methods such as an emulsion polymerization method (a method for polymerizing by collectively mixing a polymerization catalyst with water, a surfactant and the monomers), a monomer dropping method, a multi-stage polymerization method and a preemulsion method can be adopted.

A conventionally known polymerization catalyst can be used, for example a usual radical polymerization initiator such as hydrogen peroxide, potassium peroxide or 2,2'-azobis(2-aminodipropane) dihydrochloride can be cited. Conventionally known anionic, nonionic, cationic and amphoteric surfactants or reactive surfactants can be cited as the surfactant. The polymerization temperature is usually 0 to 100 °C, preferably 50 to 80 °C. The polymerization time is usually 1 to 10 hours.

When the polymer is obtained by using the addition polymerizable oxazoline (a) and at least one or more kinds of the other monomers (b), the amount of the compounded addition polymerizable oxazoline (a) is preferably suitably determined within the range of 0.5% by weight or more based on the whole monomers. When the amount of the compounded addition polymerizable oxazoline (a) is less than 0.5% by weight, it is sometimes difficult to achieve the object of the present invention.

Specific examples of the epoxy resin used as the cross-linking agent (D) include polyepoxy compounds, diepoxy compounds, monoepoxy compounds and the like. Examples of the polyepoxy compound include sorbitol polyglycidyl ether, polyglycerol polyglycidyl ether, pentaerythritol polyglycidyl ether, diglycerol polyglycidyl ether, triglycidyltris(2-hydroxyethyl)isocyanate, glycerol polyglycidyl ether, trimethylolpropane polyglycidyl ether, N,N,N',N'-tetraglycidyl-m-xylylenediamine, N,N,N',N'-tetraglycidyl-4,4'-diaminodiphenylmethane, N,N,N',N'-tetraglycidyl-1,3-bisaminomethylcyclohexane and the like. Examples of the diepoxy compounds include neopentyl glycol diglycidyl ether, 1,6-hexanediol diglycidyl ether, resorcinol diglycidyl ether, ethylene glycol diglycidyl ether, polyethylene glycol diglycidyl ether, propylene glycol diglycidyl ether, polypropylene glycol diglycidyl ether, polytetramethylene glycol diglycidyl ether and the like. Examples of the monoepoxy compounds include allyl glycidyl ether, 2-ethylhexyl glycidyl ether, phenyl glycidyl ether and the like. Among them, N,N,N',N'-tetraglycidyl-m-xylylenediamine, N,N,N',N'-tetraglycidyl-4,4'-diaminodiphenylmethane and N,N,N',N'-tetraglycidyl-1,3-bisaminomethylcyclohexane can preferably be exemplified.

Examples of the urea resins used as the cross-linking agent (D) preferably include dimethylolurea, dimethylolethyleneurea, dimethylolpropyleneurea, tetramethylolacetyleneurea, 4-methoxy-5-dimethylpropyleneurea dimethylol and the like.

Examples of the melamine resins used as the cross-linking agent (D) preferably include a compound etherified by reacting a methylolmelamine derivative obtained by condensing melamine with formaldehyde with methyl alcohol, ethyl alcohol, isopropyl alcohol or the like as a lower alcohol and a mixture thereof.

Examples of the methylolmelamine derivatives used as the cross-linking agent (D) include monomethylolmelamine, dimethylolmelamine, trimethylolmelamine, tetramethylolmelamine, pentamethylolmelamine, hexamethylolmelamine and the like.

Among the cross-linking agents (D), epoxy resins, especially polyepoxy compounds are preferable. The cross-linking agents may be used alone or two or more kinds, if necessary, may be used in combination.

<Contents of compositional components in coating layer>

In the composition constituting the coating layer, the composition comprises, per 100% by weight of the composition, (B) 10 to 30% by weight of (B1) the polyvinyl alcohol and/or (B2) the polyalkylene oxide having a number-average molecular weight of 600 to 2000 and (C) 3 to 25% by weight of the fine particles having an average particle diameter of 20 to 80 nm. When the amount of (B) (B1) the polyvinyl alcohol and/or (B2) the polyalkylene oxide having a number-average molecular weight of 600 to 2000 is less than 10% by weight, adhesiveness to an ink-receiving layer is insufficient. When the amount exceeds 30% by weight, blocking resistance is lowered. When the amount of the fine particles (C) is less than 3% by weight, the slipperiness (transportability) of the film is insufficient. When the amount exceeds 25% by weight, the abrasion property is lowered.

The composition contains, per 100% by weight of the composition, preferably further (A) 50 to 80% by weight of the copolyester. When the amount of the copolyester (A) is less than 50% by weight, adhesiveness to the polyester film is insufficient. When the amount exceeds 80% by weight, it is undesirable because adhesiveness to an ink-receiving layer is lowered.

The composition contains, per 100% by weight of the composition, preferably further (D) 1 to 20% by weight of the cross-linking agent. When the amount of the cross-linking agent (D) is less than 1% by weight, water resistance and blocking tendency are insufficient. When the amount exceeds 20% by weight, it is undesirable because adhesiveness to an ink-receiving layer is lowered.

The cross-linking agent such as oxazoline group-containing polymers, urea resins, melamine resins or epoxy resins, an antistatic agent, a colorant or a surfactant may be compounded as components other than those described above in the composition constituting the coating layer, and a surfactant is preferably compounded.

<Surface energy of coating layer>

It is necessary that the surface energy of the coating layer in the present invention is 50 to 70 dyne/cm.

The surface energy of the coating layer in the present invention is preferably 54 to 70 dyne/cm, especially preferably 60 to 65 dyne/cm when the composition of the coating layer comprises the polyalkylene oxide (B2) having a number-average molecular weight of 600 to 2000. When the surface energy is less than 50 dyne/cm, coatability and adhesiveness of the aqueous ink-receiving layer become inferior. When the surface energy exceeds 70 dyne/cm, it is undesirable because the adhesion to the polyester film which is a substrate is sometimes insufficient or moisture resistance of the coating layer is sometimes insufficient.

When the composition of the coating layer in the present invention comprises the polyvinyl alcohol (B1), the surface energy thereof is preferably 50 to 65 dyne/cm, more preferably 55 to 62 dyne/cm. When the surface energy is less than 50 dyne/cm, the coatability and adhesiveness of the aqueous ink-receiving layer become inferior. When the surface energy exceeds 65 dyne/cm, it is undesirable because the adhesion to the polyester film which is the substrate is sometimes insufficient or moisture resistance of the coating layer is sometimes insufficient.

The coating layer having the surface energy can be obtained by laminating the above composition constituting the coating layer to a thickness of, for example 0.02 to 1 μm onto the film.

<Center line average height of coating layer>

The polyester adhesive film readily adhering to an ink-receiving layer of the present invention has preferably a center line average height (Ra) of the coating layer surface within the range of preferably 2 to 40 nm, especially preferably 4 to 30 nm. When Ra is less than 2 nm, the blocking resistance of the laminated film is sometimes inferior. When Ra exceeds 40 nm, it is undesirable because the transparency of the laminated film is sometimes lowered. Ra can be adjusted by the kind, size and amount of the lubricant contained in the polyester film and the kind, size and amount of the fine particles (C) which are a coating layer component.

<Haze>

The haze of the polyester adhesive film readily adhering to an ink-receiving layer of the present invention is preferably less than 5%, more preferably less than 3%, especially preferably less than 1.5%. When the haze is 5% or more, the sharpness of the printing is sometimes deteriorated.

<Method for production>

In the present invention, at least one surface of the polyester film is coated with a coating layer composed of the composition as described above; however, the surface can be coated with the coating layer, for example by coating an orientable polyester film with an aqueous liquid containing the above composition, then drying the aqueous liquid, orienting the film, and if necessary, heat-treating the resulting film. The solid concentration of the aqueous liquid is usually 30% by weight or less, more preferably 10% by weight or less.

The orientable polyester film is an unoriented polyester film, a uniaxially oriented film or a biaxially oriented polyester film. Among them, a longitudinal oriented polyester film uniaxially oriented in the extrusion direction (the machine direction) of the film is especially preferable.

When the polyester film is coated with the aqueous liquid, it is unfavorable because dirt, dust and the like are wrapped when the coating is carried out in a usual coating step for a biaxially oriented and heat-set polyester film, i. e. in a step separate from the production process of the film. From the viewpoint, the coating is preferably carried out in a clean atmosphere, i.e. in a film production process. The adhesion of the coating layer (coating layer) to the polyester film is further improved by the coating.

Known optional coating methods can be applied to the coating method. For example, a roll coating method, a gravure coating method, a roll brush method, a spray coating method, an air knife coating method, an impregnating method and a curtain coating method can be used alone or in combination. The coating weight is preferably 0.5 to 20 g, more preferably 1 to 10 g based on 1 $m^2$ of a running film. The coating liquid is preferably used as an aqueous dispersion or an emulsion.

The orientable polyester film coated with the aqueous liquid is led to a drying and an orienting treatment steps; however, the treatments can be conducted under conditions heretofore accumulated in the art. Preferable conditions are, for example drying conditions are 90 to 130 °C and 2 to 10 seconds and the drawing temperature is 90 to 130 °C. The orientation ratio is 3 to 5 times in the machine direction and 3 to 5 times in the transverse direction and, if necessary, 1 to 3 times in the re-machine direction. When the film is heat-set, the conditions are 180 to 240 °C and 2 to 20 seconds.

The thickness of the biaxially oriented polyester film after the treatments is preferably 50 to 150 µm and the thickness of the coating layer is preferably 0.02 to 1 µm.

<Examples>

The present invention will be further explained by way of examples. Respective characteristic values were measured by the following methods.

1. Adhesiveness

One surface of a polyester film is coated with an aqueous slurry prepared by mixing 30% by weight of spherical silica (an average particle diameter of 18 µm, an average pore diameter of 200 Å and an average pore volume of 1.5 cc/g) with 70% by weight of a polyvinyl alcohol (PVA 117, manufactured by Kuraray Co., Ltd.) to 20 µm expressed in terms of the dry thickness, and a Scotch tape (No. 600, manufactured by 3M Company) having a width of 12.7 mm and a length of 150 mm was made to adhere thereonto so as not to include bubbles. The top surface of the tape was leveled with a manual load roll described in JIS C2701 (1975) to make the tape closely adhere. The film was then cut out to the tape width. Peeling conditions of an ink-receiving layer from the polyester film were observed when the Scotch tape was peeled from the sample thus prepared and the adhesiveness was evaluated as follows:

| | |
|---|---|
| A | No observed peeling at all with good adhesion |
| B | Slightly observed peeling in foreign material parts |
| C | Markedly observed peeling. |

2. Water-resistant adhesiveness

The sample subjected to the evaluation of adhesiveness was rubbed with a gauze soaked with water from

the upper part of an ink-receiving layer. After rubbing several times, the falling off of the ink-receiving layer was evaluated as follows:

| | | |
|---|---|---|
| A | 50 times or more | Excellent water-resistant adhesiveness |
| B | 30 to 50 times | Good water-resistant adhesiveness |
| C | Less than 30 times | Bad water-resistant adhesiveness. |

3. Coefficient of friction

The coefficient of static friction was measured by putting the right side and the back side of the film together and applying a load of 1 kg by using a slip tester manufactured by Toyo Tester according to ASTM D1894-63. When the coefficient of friction exceeds 0.6, trouble is caused in film transportability.

3. Blocking tendency

Two films cut to a width of 50 mm were superimposed and treated under a load of 50 $kg/cm^2$ at 40 °C and 50%RH for 17 hours. The peel strength (g/50 mm) of the site where the load was applied was measured with a tensile tester. Evaluation was carried out depending on the value of the peel strength as follows:

| | |
|---|---|
| Peel strength ≦ 10 g/50 mm | Good blocking tendency |
| 10g/50 mm<peel strength ≦ 30 g/50 mm | Fair blocking tendency |
| 30 g/50 mm<peel strength | Bad blocking tendency. |

5. Surface energy

The critical surface tension y c measured according to W.A. Zisman: "Contact Augle, Wettability and Adhesion", Am. Chem. Soc., (1964) was taken as the surface energy.

6. Second order transition point (Tg)

Measurements were carried out at a heat-up rate of 20 °C/min by using a Thermal Analyst model 2000 differential calorimeter, manufactured by E. I. du Pont de Nemours and Co.

7. Intrinsic viscosity

The intrinsic viscosity was determined by measuring the viscosity of a solution in o-chlorophenol solvent at 35 °C.

8. Water dispersibility

A coating agent was diluted with water and converted into a 0.2 wt.% aqueous dispersion and light transmittance was measured by using a cell made of quartz with a double-beam spectrophotometer (model 228A instrument) manufactured by Hitachi, Ltd. Evaluation was made from results of measurement as follows:

| | |
|---|---|
| Light transmittance ≧ 80% | Good water dispersibility |
| 80%>light transmittance≧30% | Fair water dispersibility |
| 30%>light transmittance | Bad water dispersibility. |

9. Moisture resistance

The peel strength (g/50 mm) was measured in the same method as in the evaluation of the blocking tendency, except that the treating conditions were 60°C and 70%RH for 17 hours. Evaluation was made from the results of measurements as follows:

| | |
|---|---|
| Peel strength ≦ 10 g/50 mm | Good moisture resistance |
| 10 g/50 mm<peel strength≦30 g/50 mm | Fair moisture resistance |
| 30 g/50 mm≦peel strength | Bad moisture resistance. |

10. Haze

Measurements were made by using an HR-100 model hazemeter, manufactured by Murakami Color Research Laboratory according to ASTM D1003.

11. Heat shrinkage percentage

The shrinkage percentage after heat-treating a polyester film at 150 °C for 30 minutes was measured at a distance between gauge marks of 30 cm.

12. Center line average height (Ra)

A chart was drawn under conditions of a stylus radius of 2 µm, a load of 30 mg, a magnification ratio of 50000 × and a cutoff of 0.08 mm by using a high-precision surface roughness meter SE-3 FAT manufactured by Kosaka Laboratory Ltd. according to JIS B0601. A part of the measurement length of L was taken out of the surface roughness curve in the center line direction thereof and values determined by the following formula were expressed in units of nm when the roughness curve was expressed by Y = f(x) taking the center line of the taken out part as the X-axis and the direction of machine direction ratio as the Y-axis.

$$Ra = \frac{1}{L}\int_0^L |f(x)|\,dx$$

13. Sharpness

A design drawing of a polyester film coated with an ink-receiving layer was printed with a design drawing prepared by CAD of a personal computer or the like by using an ink jet printer (PM-750C manufactured by SEIKO EPSON CORPORATION), and the sharpness of the prints was visually observed to made evaluation as follows:

| | | |
|---|---|---|
| A | Excellent sharpness | Excellent sharpness |
| B | Good sharpness | Good sharpness |
| C | Bad sharpness | Bad sharpness. |

14.Weatherability

The printed film used in the evaluation of the sharpness was applied to a black paperboard and four corners were firmly fastened with aluminized tapes and accelerated outdoor exposure tests were carried out by irradiating the film for 1000 hours (corresponding to one year of outdoor exposure) using a Sunshine weatherometer (Model WEL-SUN-HCL, manufactured by Suga Test Instruments Co., Ltd.) according to JIS-K-6783b. The discoloration of the prints of the sample was visually observed to make evaluation as follows:

| | | |
|---|---|---|
| A | Scarcely observed discoloration | Excellent weatherability |
| B | Slightly observed discoloration without affecting sharpness of prints | Good weatherability |
| C | Marked discoloration and lost sharpness of prints | Bad weatherability. |

Example 1

Polyethylene terephthalate (intrinsic viscosity: 0.62) containing 1% by weight of an ultraviolet light absorber

represented by the following formula (A) was melt extruded onto a rotating cooling drum maintained at 20 °C to provide an unoriented film.

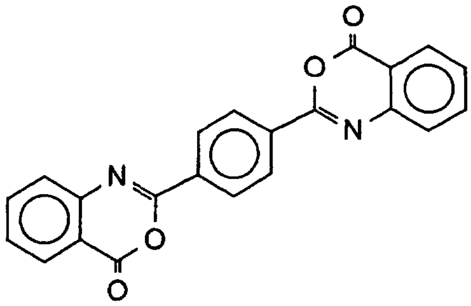

...... (A)

The resulting unoriented film was oriented at 100 °C and 3.5 times in the machine axial direction and then coated with an aqueous liquid having a composition of 60% by weight of a copolymer polyester (Tg = 53 °C, hereinafter simply referred to as [E-1]) comprising an acid component composed of terephthalic acid [50 mol%], isophthalic acid [40 mol%] and 5-sodium sulfoisophthalic acid [10 mol%] and a glycol component composed of ethylene glycol [30 mol%], diethylene glycol [20 mol%] and neopentyl glycol [50 mol%], 20% by weight of a polyethylene oxide having a molecular weight of 1000, 10% by weight of cross-linked acrylic resin particles having an average particle diameter of 40 nm and 10% by weight of a polyoxyethylene lauryl ether (a surfactant) at a solid concentration of 4% by weight with a roll coater.

The longitudinal oriented film coated with the aqueous liquid was subsequently oriented at 124 °C and 3.8 times in the transverse direction while being dried and further heat-set at 230 °C to provide a biaxially oriented film having a thickness of 100 μm.

The film had a coating layer thickness of 0.03 μm, a surface energy of 61 dyne/cm and a heat shrinkage percentage of 0.8% in the machine direction and 0.3% in the transverse direction. Table 1 shows characteristics of the film.

Comparative Example 1

The procedures were carried out in the same manner as in Example 1, except that the film was not coated with the aqueous liquid in Example 1. Table 1 shows the characteristics of the resulting biaxially oriented polyester film.

Examples 2 to 7

Procedures were carried out in the same manner as in Example 1, except that the kind and ratio of the coating agent were changed as shown in Table 1 in Example 1. Table 1 shows characteristics of the resulting biaxially oriented polyester film.

As can be seen from the results shown in Table 1, the biaxially oriented polyester films of the present. invention have excellent weatherability and adhesiveness and are useful as a polyester adhesive film readily adhering to an ink-receiving layer.

Table 1

| | Composition for Coating Layer | | | | | | | (1) | (2) | (3) | (4) | (5) |
|---|---|---|---|---|---|---|---|---|---|---|---|---|
| | (6) | | (7) | | (8) | | (9) | | | | | |
| | (10) | (11) | (10) | (11) | (10) | (11) | (11) | | | | | |
| Ex. 1 | E-1 | 60 | P-1 | 20 | M-1 | 10 | 10 | 5 | 0.8 | A | A | 59 |
| Ex. 2 | E-1 | 65 | P-1 | 15 | M-1 | 10 | 10 | 5 | 0.7 | A | A | 57 |
| Ex.3 | E-1 | 60 | Q-1 | 20 | M-1 | 10 | 10 | 5 | 0.8 | A | A | 57 |
| Ex.4 | E-1 | 65 | Q-1 | 15 | M-1 | 10 | 10 | 5 | 0.8 | A | A | 56 |
| Ex. 5 | F-1 | 60 | P-1 | 20 | M-1 | 10 | 10 | 6 | 1.0 | A | A | 60 |
| Ex. 6 | F-1 | 65 | P-1 | 15 | M-1 | 10 | 10 | 6 | 0.9 | A | A | 58 |
| Ex.7 | F-1 | 55 | Q-1 | 25 | N-1 | 10 | 10 | 7 | 1.4 | A | A | 62 |
| (12) | - | | - | | - | | | 4 | 0.7 | C | (13) | 46 |

Notes:
(1) means "Surface Roughness of Coating Layer Ra [nm]".
(2) means "Haze [%]".
(3) means "Adhesiveness".
(4) means "Weatherability".
(5) means "Surface Energy [dyne/cm]".
(6) means "(A) Copolyester".
(7) means "(B) Polyalkylene Oxide".
(8) means "(C) Fine Particles".
(9) means "Polyoxyethylene Lauryl Ether".
(10) means "Kind".
(11) means "% by weight".
(12) means "Comparative Example 1".
(13) means "Unevaluated".
Ex. means "Example".

In Table 1, the kinds E-1 and F-1 of the copolyester are the following copolymer polyesters:

E-1 : a copolymer polyester (Tg = 53 °C) of terephthalic acid [50 mol%], isophthalic acid [40 mol%], 5-sodium sulfoisophthalic acid [10 mol%]/ethylene glycol [30 mol%], diethylene glycol [20 mol%] and neopentyl glycol [50 mol%]

F-1: a copolymer polyester (Tg = 66 °C) of 2,6-naphthalenedicarboxylic acid [20 mol%], isophthalic acid [65 mol%], 5-potassium sulfoterephthalic acid [15 mol%]/ethylene glycol [50 mol%]and neopentyl glycol [50 mol%].

In Table 1, the kinds P-1 and Q-1 of the polyalkylene oxide are the following compounds:

P-1: a polyethylene oxide having a molecular weight of 1000

Q-1: a polypropylene oxide having a molecular weight of 1200.

In Table 1, the kinds M-1 and N-1 of the fine particles are the following particles:

M-1: cross-linked acrylic particles having an average particle diameter of 40 nm

N-1: colloidal silica particles having an average particle diameter of 40 nm.

Examples 8 to 11 and Comparative Examples 2 and 3

Biaxially oriented polyester films were obtained in the same manner as in Example 1, except that the kind of the copolyester (A) was changed as shown in Tables 2 and 3 and copolyesters having a different Tg were used in Example 1. Table 2 shows characteristics of the resulting films.

As can be seen from the results shown in Table 2, the biaxially oriented polyester films of the present invention have excellent weatherability, blocking tendency and adhesiveness and are useful as a polyester adhesive film readily

adhering to an ink-receiving layer.

Table 2

| | (1) | (2) | (3) | (4) | (5) | (6) | (7) |
|---|---|---|---|---|---|---|---|
| Ex. 8 | G-1 | 25 | Fair | 4 | 0.7 | A | A |
| Ex. 9 | H-1 | 42 | Good | 5 | 0.9 | A | A |
| Ex. 10 | I-1 | 77 | Good | 5 | 1.2 | A | A |
| Ex. 11 | J-1 | 86 | Good | 7 | 1.6 | B | A |
| (8) | K-1 | 15 | Bad | 4 | 0.8 | A | A |
| (9) | L-1 | 93 | Good | 8 | 1.9 | C | A |

Notes:
(1) means "Kind of (A) Copolyester".
(2) means "Tg of (A) Copolyester".
(3) means "Blocking Tendency".
(4) means "Surface Roughness of Coating Layer Ra [nm]".
(5) means "Haze [%]".
(6) means "Adhesiveness".
(7) means "Weatherability".
(8) means "Comparative Example 2".
(9) means "Comparative Example 3".
Ex. means "Example".

Table 3

| (1) | | (2) | | | | | |
|---|---|---|---|---|---|---|---|
| | (3) | G-1 | H-1 | I-1 | J-1 | K-1 | L-1 |
| Terephthalic Acid | | | 55 | | | | |
| Isophthalic Acid | | 90 | 35 | 20 | 10 | 90 | 10 |
| (4) | | | | 70 | 80 | | 80 |
| (5) | | | 10 | 10 | 10 | 10 | 10 |
| (6) | | 10 | | | | | |
| Ethylene Glycol | | | 60 | 70 | 75 | | 85 |
| Diethylene Glycol | | | 40 | 30 | 25 | | 15 |
| 1,4-Butanediol | | 50 | | | | 70 | |
| Neopentyl Glycol | | 50 | | | | 30 | |

Notes:
(1) means "Copolymerization Components"
(2) means "Copolymerization Composition of (A) Copolyester (Numerical Values Indicate mol%)".
(3) means "Kind of (A)".
(4) means "2,6-Naphthalenedicarboxylic Acid".
(5) means "5-Sodium Sulfoisophthalic Acid".
(6) means "5-Potassium Sulfoisophthalic Acid".

Examples 12 to 16 and Comparative Examples 4 and 5

Biaxially oriented polyester films were obtained in the same manner manner as in Example 1, except that the ratio of the dicarboxylic acid component as in Example 1, except that the ratio of the dicarboxylic acid component containing the sulfonate group was changed as shown in Table 4 in Example 1. Table 4 shows characteristics of the resulting films.

As can be seen from the results shown in Table 4, the coating agent in the present invention has excellent water dispersibility and the biaxially oriented polyester films of the present invention have excellent moisture resistance.

Table 4

| | (1) | | | (2) | (3) | (4) |
|---|---|---|---|---|---|---|
| | (5) | (6) | (7) | | | |
| Ex. 12 | 1 | 50 | 49 | Fair | Good | A |
| Ex. 13 | 4 | 50 | 46 | Fair | Good | A |
| Ex. 14 | 6 | 50 | 44 | Good | Good | A |
| Ex. 15 | 12 | 50 | 38 | Good | Good | A |
| Ex. 16 | 16 | 50 | 34 | Good | Fair | A |
| (8) | 0 | 50 | 50 | Bad | Good | (10) |
| (9) | 20 | 50 | 30 | Good | Bad | (10) |

Notes:
(1) means "Ratio of Dicarboxylic Acid Component of (A) Copolyester [mol%]".
(2) means "Water Dispersibility".
(3) means "Moisture Resistance".
(4) means "Weatherability".
(5) means "5-Sodium Sulfoisophthalic Acid".
(6) means "Terephthalic Acid".
(7) means "Isophthalic Acid".
(8) means "Comparative Example 4".
(9) means "Comparative Example 5".
(10) means "Unevaluated".
Ex. means "Example".

Examples 17 to 19 and Comparative Examples 6 and 7

Biaxially oriented polyester films were obtained in the same manner as in Example 1, except that the ratios of (A) the copolyester, (B) the polyalkylene oxide and (C) the fine particles were changed as shown in Table 5 in Example 1. Table 5 shows characteristics of the resulting films.

As can be seen from the results shown in Table 5, the biaxially oriented polyester films of the present invention have excellent adhesiveness, transportability and weatherability.

Table 5

| | (1) | | | (2) | (3) | (4) | (5) |
|---|---|---|---|---|---|---|---|
| | (6) | (7) | (8) | | | | |
| | (9) | (9) | (9) | | | | |
| Ex. 17 | 70 | 10 | 10 | A | A | 0.35 | 56 |
| Ex. 18 | 58 | 22 | 10 | A | A | 0.39 | 63 |
| Ex. 19 | 54 | 26 | 10 | A | A | 0.57 | 66 |

Notes:
(1) means "Composition for Coating Layer".
(2) means "Adhesiveness".
(3) means "Weatherability".
(4) means "Coefficient of Friction".
(5) means "Surface Energy [dyne/cm]".
(6) means "(A) Copolyester".
(7) means "(B) Polyalkylene Oxide".
(8) means "(C) Fine Particles".
(9) means "[% by weight]".

Table 5 (continued)

| | (1) | | | (2) | (3) | (4) | (5) |
|---|---|---|---|---|---|---|---|
| | (6) | (7) | (8) | | | | |
| | (9) | (9) | (9) | | | | |
| (10) | 43 | 37 | 10 | B | (12) | 0.69 | 70 |
| (11) | 73 | 7 | 10 | C | (12) | 0.34 | 52 |

Notes:
(1) means "Composition for Coating Layer".
(2) means "Adhesiveness".
(3) means "Weatherability".
(4) means "Coefficient of Friction".
(5) means "Surface Energy [dyne/cm]".
(6) means "(A) Copolyester".
(7) means "(B) Polyalkylene Oxide".
(8) means "(C) Fine Particles".
(9) means "[% by weight]".
(10) means "Comparative Example 6".
(11) means "Comparative Example 7".
(12) means "Unevaluated".
Ex. means "Example".

Examples 20 and 21 and Comparative Examples 8 and 9

Biaxially oriented polyester films were obtained in the same manner as in Example 1, except that the particle diameter of (C) the fine particles was changed as shown in Table 6 in Example 1. Table 6 shows characteristics of the resulting films.

As can be seen from the results shown in Table 6, the biaxially oriented polyester films of the present invention have excellent blocking resistance.

Table 6

| | Average Particle Diameter of (C) Fine Particles [nm] | Blocking Tendency |
|---|---|---|
| Example 20 | 20 | Fair |
| Example 21 | 80 | Good |
| Comparative Example 8 | 10 | Bad |
| Comparative Example 9 | 130 | Good |

Examples 22 and 23 and Comparative Examples 10 and 11

Biaxially oriented polyester films were obtained in the same manner as in Example 1, except that the ratios of (A) the copolyester, (B) the polyalkylene oxide and (C) the fine particles were changed as shown in Table 7 in Example 1. Table 7 shows characteristics of the resulting films.

As can be seen from results shown in Table 7, the biaxially oriented films of the present invention have excellent adhesiveness and transportability.

Table 7

| | (A) Copolyester [% by weight] | (B) Polyalkylene Oxide [% by weight] | (C) Fine Particles [% by weight] | (1) | (2) | (3) |
|---|---|---|---|---|---|---|
| Ex. 22 | 69 | 18 | 3 | A | A | 0.41 |
| Ex. 33 | 52 | 18 | 20 | B | A | 0.32 |
| (4) | 71 | 18 | 1 | A | A | 0.65 |
| (5) | 45 | 18 | 27 | C | A | 0.33 |

Notes:
(1) means "Adhesiveness".
(2) means "Weatherability".
(3) means "Coefficient of Friction [μ s]".
(4) means "Comparative Example 10".
(5) means "Comparative Example 11".
Ex. means "Example".

Examples 24 and 25 and Comparative Example 12

Biaxially oriented polyester films were obtained in the same manner as in Example 1, except that the ultraviolet light absorber contained in the polyester was changed as follows in Example 1.

Example 24: containing 1% by weight of the ultraviolet light absorber represented by the following formula (B).
Example 25: containing 1% by weight of the ultraviolet light absorber represented by the following structural formula (C).
Comparative Example 12: using a polyester without containing the ultraviolet light absorber.

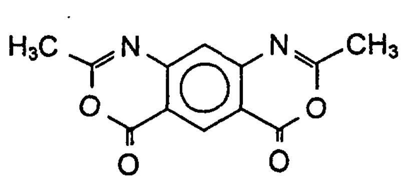

······ (B)

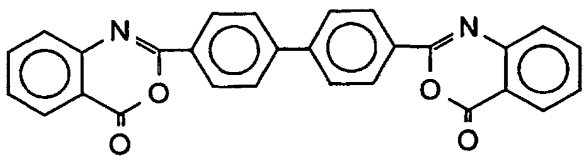

······ (C)

As a result of weatherability tests carried out by using the films, the results of weatherability tests were rank A in the case of Examples 24 and 25; however, the results of the weatherability tests were rank C and extremely worsened in the case of Comparative Example 12.

Example 26

Polyethylene terephthalate (intrinsic viscosity: 0.62) containing 1% by weight of the ultraviolet light absorber represented by the following formula (A) was melt extruded onto a rotating cooling drum maintained at 20 °C to provide

an unoriented film.

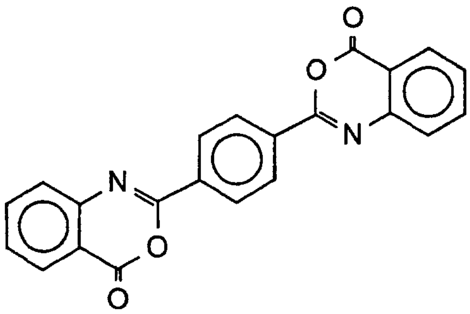

...... (A)

The resulting unoriented film was then oriented at 90 °C and 3.6 times in the machine axial direction and subsequently coated with an aqueous liquid having a composition of 50% by weight of a copolymer polyester (Tg = 28 °C, hereinafter simply referred to as [E-2]) comprising an acid component composed of terephthalic acid [50 mol%], isophthalic acid [45 mol%] and 5-sodium sulfoisophthalic acid [5 mol%] and a glycol component composed of ethylene glycol [60 mol%] and diethylene glycol [40 mol%], 20% by weight of a polyvinyl alcohol having a saponification degree of 74 to 80 mol%, 10% by weight of cross-linked acrylic resin particles having an average particle diameter of 30 nm, 10 by weight of N,N,N',N'-tetraglycidyl-m-xylylenediamine and 10% by weight of polyoxyethylene lauryl ether at a solid concentration of 4% by weight with a roll coater.

The longitudinal oriented film coated with the aqueous liquid was then oriented at 95 °C and 4 times in the transverse direction while being dried and further heat-set at 230 °C to afford a biaxially oriented film having a thickness of 100 µm.

The resulting film had a coating layer thickness of 0.04 µm, a surface energy of 61 dyne/cm and a heat shrinkage percentage of 0.8% in the machine direction and 0.2% in the transverse direction. Table 8 shows characteristics of the resulting film.

Comparative Example 13

Procedures were carried out in the same manner as in Example 26, except that the film was not coated with the aqueous liquid in Example 26. Table 8 shows characteristics of the resulting biaxially oriented polyester film.

Examples 27 to 36

Procedures were carried out in the same manner as in Example 26, except that the kind and ratio of the coating agent were changed as shown in Table 8 in Example 26. Table 8 shows characteristics of the resulting biaxially oriented polyester films.

As can be seen from the results shown in Table 8, the biaxially oriented polyester films of the present invention have excellent weatherability and adhesiveness and are useful as polyester films readily adhering to an ink-receiving layer.

Table 8

| | Composition for Coating Layer | | | | | | | | (5) | (6) | (7) | (8) |
|---|---|---|---|---|---|---|---|---|---|---|---|---|
| | (1) | | (2) | | (3) | | (4) | | | | | |
| | (9) | (10) | (9) | (10) | (9) | (10) | (9) | (10) | | | | |
| Ex. 26 | E-2 | 50 | R-2 | 20 | M-2 | 10 | T | 10 | A | A | A | 61 |
| Ex. 27 | E-2 | 63 | R-2 | 12 | M-2 | 10 | T | 5 | A | A | A | 58 |
| Ex. 28 | E-2 | 50 | S-2 | 20 | M-2 | 10 | T | 10 | A | A | A | 61 |
| Ex. 29 | E-2 | 63 | S-2 | 12 | M-2 | 10 | T | 5 | A | A | A | 58 |
| Ex. 30 | E-2 | 60 | R-2 | 15 | M-2 | 10 | U | 5 | A | A | A | 59 |
| Ex. 31 | E-2 | 60 | R-2 | 15 | M-2 | 10 | X | 5 | A | A | A | 59 |
| Ex. 32 | E-2 | 60 | R-2 | 15 | M-2 | 10 | V | 5 | A | A | A | 59 |
| Ex. 33 | F-2 | 55 | R-2 | 15 | M-2 | 10 | T | 10 | A | A | A | 59 |
| Ex. 34 | F-2 | 63 | R-2 | 12 | M-2 | 10 | T | 5 | A | A | A | 58 |
| Ex. 35 | F-2 | 50 | S-2 | 20 | M-2 | 10 | T | 10 | A | A | A | 61 |
| Ex. 36 | E-2 | 61 | R-2 | 12 | N-2 | 7 | T | 10 | A | A | A | 57 |
| (11) | - | | - | | - | | | | C | C | (12) | 46 |

Notes:
(1) means "(A) Copolyester".
(2) means "(B) Carboxylic Acid-modified PVA".
(3) means "(C) Fine Particles".
(4) means "Cross-linking Agent".
(5) means "Adhesiveness".
(6) means "Water-resistant adhesiveness".
(7) means "Weatherability".
(8) means "Surface Energy [dyne/cm]".
(9) means "Kind".
(10) means "[% by weight]".
(11) means "Comparative Example 13".
(12) means "Unevaluated".
Ex. means "Example".

In Tables 8, 12, 14 and 15, the kinds E-2 and F-2 of the copolyester are the following copolymer polyesters:

E-2: a copolymer polyester (Tg = 28 °C) of terephthalic acid [50 mol%], isophthalic acid [45 mol%], 5-sodium sulfoisophthalic acid [5 mol°/]/ethylene glycol [60 mol%] and diethylene glycol [40 mol%]

F-2: a copolymer polyester (Tg = 72 °C ) of 2,6-naphthalenedicarboxylic acid [50 mol%], isophthalic acid [46 mol%], 5-potassium sulfoterephthalic acid [4 mol%]/ethylene glycol [50 mol%] and neopentyl glycol [50 mol%].

The kinds R-2 and S-2 of the polyvinyl alcohol are the following compounds:

R-2: a polyvinyl alcohol having a saponification degree of 76 to 82 mol%

S-2: a polyvinyl alcohol having a saponification degree of 86 to 89 mol%.

The kinds M-2 and N-2 of the fine particles are the following compounds:

M-2: cross-linked acrylic particles having an average particle diameter of 40 nm
N-2: colloidal silica particles having an average particle diameter of 40 nm.

The kinds T, U, X and V of the cross-linking agent are the following compounds:

T: an epoxy resin; N,N,N',N'-tetraglycidyl-m-xylylenediamine
U: a melamine resin; trimethoxymethylmelamine (trimethylolmelamine etherified with methanol)
X: a polymer having oxazoline groups; a copolymer of 2-propenyl-oxazoline (60 mol%) and methyl methacrylate (40 mol%)
V: dimethylolethyleneurea.

Examples 37 to 40 and Comparative Examples 14 and 15

Biaxially oriented polyester films were obtained in the same manner as in Example 1, except that the kind of (A) the copolyester resin was changed as shown in Tables 9 and 10 and copolyester resins having a different Tg were used in Example 1. Table 9 shows characteristics of the resulting films.

As can be seen from the results shown in Table 9, the biaxially oriented polyester films of the present invention have excellent weatherability, blocking resistance and adhesiveness and are useful as polyester films readily adhering to ink-receiving layer.

Table 9

| | Kind of (A) Copolyester | Tg of (A) Copolyester [°C] | Blocking Tendency | Adhesiveness | (1) |
|---|---|---|---|---|---|
| Example 37 | G-2 | 24 | Fair | A | A |
| Example 38 | H-2 | 45 | Good | A | A |
| Example 39 | I-2 | 65 | Good | A | A |
| Example 40 | J-2 | 79 | Good | B | A |
| (2) | K-2 | 17 | Bad | A | A |
| (3) | L-2 | 98 | Good | C | A |

Notes:
(1) means "Weatherability".
(2) means "Comparative Example 14".
(3) means "Comparative Example 15".

Table 10

| Copolymerization Component | | Copolymerization Composition of (A)Copolyester (Numerical Values Indicate mol%) | | | | | |
|---|---|---|---|---|---|---|---|
| | Kind of (A) | G-2 | H-2 | I-2 | J-2 | K-2 | L-2 |
| Terephthalic Acid | | 59 | 45 | 75 | | 16 | 17 |
| Isophthalic Acid | | 37 | 41 | 19 | 34 | 78 | |
| 2,6-Naphthalenedicarboxylic Acid | | | 10 | | 60 | | 77 |
| 5-Sodium Sulfoisophthalic Acid | | | 4 | 6 | 6 | 6 | 6 |
| 5-Potassium Sulfoisophthalic Acid | | 4 | | | | | |
| Ethylene Glycol | | 5 | 60 | 60 | 70 | | 90 |
| Diethylene Glycol | | 3 | | | | 5 | |

Table 10 (continued)

| Copolymerization Component | | Copolymerization Composition of (A)Copolyester (Numerical Values Indicate mol%) | | | | | |
|---|---|---|---|---|---|---|---|
| | Kind of (A) | G-2 | H-2 | I-2 | J-2 | K-2 | L-2 |
| 1,4-Butanediol | | 42 | 4 | | 10 | 60 | |
| Neopentyl Glycol | | 50 | 36 | 40 | 20 | 35 | 10 |

Examples 41 to 45 and Comparative Examples 16 and 17

Biaxially oriented polyester films were obtained in the same manner as in Example 26, except that the ratio of the dicarboxylic acid component containing the sulfonate group of (A) the copolyester resin was changed as shown in Table 1 in Example 26. Table 11 shows characteristics of the resulting films.

As can be seen from the results shown in Table 11, the coating agent in the present invention has excellent water dispersibility and the biaxially oriented polyester films of the present invention have excellent moisture resistance.

Table 11

| | Ratio of Dicarboxylic Acid Component in (A) Copolyester [mol%] | | | (1) | (2) | (3) |
|---|---|---|---|---|---|---|
| | 5-Sodium Sulfoisophthalic Acid | Terephthalic Acid | Isophthalic Acid | | | |
| Ex. 41 | 1 | 55 | 44 | Fair | Good | A |
| Ex. 42 | 2 | 55 | 43 | Good | Good | A |
| Ex. 43 | 6 | 55 | 39 | Good | Good | A |
| Ex. 44 | 12 | 55 | 33 | Good | Good | A |
| Ex. 45 | 16 | 55 | 29 | Good | Fair | A |
| (4) | 0 | 55 | 45 | Bad | Good | (6) |
| (5) | 20 | 55 | 25 | Good | Bad | (6) |

Notes:
(1) means "Water Dispersibility".
(2) means "Moisture Resistance".
(3) means "Weatherability".
(4) means "Comparative Example 16".
(5) means "Comparative Example 17".
(6) means "Unevaluated".
Ex. means "Example".

Examples 46 to 48 and Comparative Examples 18 to 21

Biaxially oriented polyester films were obtained in the same manner as in Example 26, except that the ratios of (A) the copolyester resin, (B) the polyvinyl alcohol, (C) the fine particles and (D) the cross-linking agent were changed as shown in Table 12 in Example 26. Table 12 shows characteristics of the resulting films.

As can be seen from the results shown in Table 12, the biaxially oriented polyester films have excellent adhesiveness, transportability and weatherability.

Table 12

| | Composition for Coating Layer | | | | | | | | (5) | (6) | (7) | (8) |
|---|---|---|---|---|---|---|---|---|---|---|---|---|
| | (1) | | (2) | | (3) | | (4) | | | | | |
| | Kind | (9) | Kind | (9) | Kind | (9) | Kind | (9) | | | | |
| Ex. 46 | H-2 | 45 | R-2 | 26 | M-2 | 9 | T | 10 | A | A | 0.35 | 64 |
| Ex. 47 | H-2 | 51 | R-2 | 20 | M-2 | 9 | T | 10 | A | A | 0.33 | 61 |
| Ex. 48 | H-2 | 60 | R-2 | 11 | M-2 | 9 | T | 10 | A | A | 0.41 | 57 |
| (10) | H-2 | 41 | R-2 | 40 | M-2 | 9 | T | 10 | B | A | 0.69 | 69 |
| (11) | H-2 | 69 | R-2 | 2 | M-2 | 9 | T | 10 | C | A | 0.34 | 52 |
| (12) | H-2 | 21 | R-2 | 50 | M-2 | 9 | T | 10 | C | A | 0.63 | 68 |
| (13) | H-2 | 64 | R-2 | 7 | M-2 | 9 | T | 10 | C | A | 0.35 | 54 |

Notes:
(1) means "(A) Copolyester".
(2) means "(B) Carboxylic Acid-modified PVA".
(3) means "(C) Fine Particles".
(4) means "(D) Cross-linking Agent".
(5) means "Adhesiveness".
(6) means "Weatherability".
(7) means "Coefficient of Friction".
(8) means "Surface Energy [dyne/cm]".
(9) means "[% by weight]".
(10) means "Comparative Example 18".
(11) means "Comparative Example 19".
(12) means "Comparative Example 20".
(13) means "Comparative Example 21".
Ex. means "Example".

Examples 49 and 50 and Comparative Examples 22 and 23

Biaxially oriented polyester films were obtained in the same manner as in Example 26, except that the particle diameter of (C) the fine particles was changed as shown in Table 6 in Example 26. Table 13 shows characteristics of the resulting films.

As can be seen from the results shown in Table 13, the biaxially oriented polyester films of the present invention have excellent blocking resistance.

Table 13

| | Average particle Diameter of (C) Fine Particles [nm] | Blocking Tendency |
|---|---|---|
| Example 49 | 20 | Fair |
| Example 50 | 80 | Good |
| (1) | 10 | Bad |
| (2) | 130 | Good |

Notes:
(1) means "Comparative Example 22".
(2) means "Comparative Example 23".

Examples 51 and 52 and Comparative Examples 24 and 25

Biaxially oriented polyester films were obtained in the same manner as in Example 26, except that the ratios of the (A) copolyester resin, (B) the polyvinyl alcohol, (C) the fine particles and (D) the cross-linking agent as shown in Table 14 in Example 26. Table 14 shows characteristics of the resulting films.

As can be seen from the results shown in Table 14, the biaxially oriented polyester films of the present invention have excellent adhesiveness and transportability.

Table 14

| | (1) | | (2) | | (3) | | (4) | (5) | (6) |
|---|---|---|---|---|---|---|---|---|---|
| | Kind | (7) | Kind | (7) | Kind | (7) | | | |
| Ex. 51 | H-2 | 67 | R-2 | 20 | M-2 | 3 | A | A | 0.41 |
| Ex.52 | H-2 | 50 | R-2 | 20 | M-2 | 20 | B | A | 0.32 |
| (8) | H-2 | 69 | R-2 | 20 | M-2 | 1 | A | A | 0.65 |
| (9) | H-2 | 43 | R-2 | 20 | M-2 | 27 | C | A | 0.33 |

Notes:
(1) means "(A) Copolyester".
(2) means "(B) Water-soluble Polymer".
(3) means "(C) Fine Particles".
(4) means "Adhesiveness".
(5) means "Weatherability".
(6) means "Coefficient of Friction [μ s]".
(7) means "[% by weight]".
(8) means "Comparative Example 24".
(9) means "Comparative Example 25".
Ex. means "Example".

Examples 53 to 55 and Comparative Examples 26 to 28

Biaxially oriented polyester films were obtained in the same manner as in Example 26, except that the ratios of (A) the copolyester resin, (B) the polyvinyl alcohol, (C) the fine particles and (D) the cross-linking agent were changed as shown in Table 15 in Example 26. Table 15 shows characteristics of the resulting films.

As can be seen from the results shown in Table 15, the biaxially oriented polyester films of the present invention have excellent adhesiveness and transportability.

Table 15

| | Composition for Coating Layer | | | | | | | | (5) | (6) | (7) | (8) |
|---|---|---|---|---|---|---|---|---|---|---|---|---|
| | (1) | | (2) | | (3) | | (4) | | | | | |
| | Kind | (9) | Kind | (9) | Kind | (9) | Kind | (9) | | | | |
| Ex. 53 | E-2 | 59 | R-2 | 20 | M-2 | 10 | T | 1 | A | Good | A | 60 |
| Ex. 54 | E-2 | 51 | R-2 | 20 | M-2 | 10 | T | 9 | A | Good | A | 57 |

Notes:
(1)means "(A) Copolyester".
(2) means "(B) Carboxylic Acid-modified PVA".
(3) means "(C) Fine Particles".
(4) means "(D) Cross-linking Agent".
(5) means "Adhesiveness".
(6) means "Moisture Resistance".
(7) means "Weatherability".
(8) means "Surface Energy [dyne/cm]".
(9) means "[% by weight]".

Table 15 (continued)

| | Composition for Coating Layer | | | | | | | | (5) | (6) | (7) | (8) |
|---|---|---|---|---|---|---|---|---|---|---|---|---|
| | (1) | | (2) | | (3) | | (4) | | | | | |
| | Kind | (9) | Kind | (9) | Kind | (9) | Kind | (9) | | | | |
| Ex. 55 | E-2 | 40 | R-2 | 20 | M-2 | 10 | T | 20 | A | Good | A | 56 |
| (10) | E-2 | 60 | R-2 | 20 | M-2 | 10 | - | - | B | Bad | A | 61 |
| (11) | E-2 | 30 | R-2 | 20 | M-2 | 10 | T | 30 | B | Bad | A | 56 |
| (12) | E-2 | 20 | R-2 | 20 | M-2 | 10 | T | 40 | B | Bad | A | 55 |

Notes:
(1)means "(A) Copolyester".
(2) means "(B) Carboxylic Acid-modified PVA".
(3) means "(C) Fine Particles".
(4) means "(D) Cross-linking Agent".
(5) means "Adhesiveness".
(6) means "Moisture Resistance".
(7) means "Weatherability".
(8) means "Surface Energy [dyne/cm]".
(9) means "[% by weight]".
(10) means "Comparative Example 26".
(11) means "Comparative Example 27".
(12) means "Comparative Example 28".
Ex. means "Example".

Examples 56 and 57

Biaxially oriented polyester films were obtained in the same manner as in Example 26, except that the ultraviolet light absorber contained in the polyester was changed as follows in Example 26.

Example 56: containing 1% by weight of the ultraviolet light absorber represented by the following formula (B):
Example 57: containing 1% by weight of the ultraviolet light absorber represented by the structural formula (C):

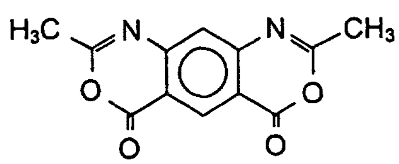

...... (B)

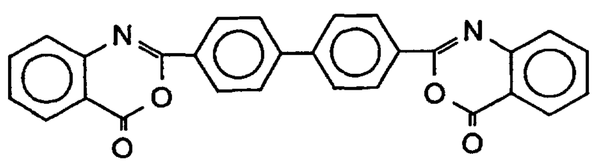

...... (C)

As a result of weatherability tests carried out by using the films, the results of the weatherability tests were

excellent and rank A in the case of Examples 56 and 57.

Example 58

Polyethylene terephthalate (intrinsic viscosity: 0.62) containing 1% by weight of the ultraviolet light absorber represented by the following formula (A) was melt extruded onto a rotating cooling drum maintained at 20 °C to provide an unoriented film.

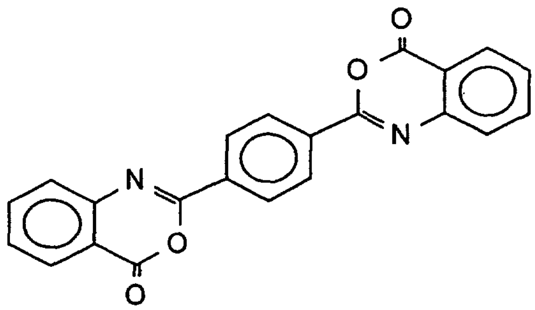

...... (A)

The resulting unoriented film was then oriented at 90 °C and 3.6 times in the machine axial direction and subsequently coated with an aqueous liquid having a composition comprising 55% by weight of a copolymer polyester (Tg = 30°C, hereinafter simply referred to as [E-3]) comprising an acid component composed of terephthalic acid [60 mol%], isophthalic acid [36 mol%] and 5-sodium sulfoisophthalic acid [4 mol%] and a glycol component composed of ethylene glycol [60 mol%] and neopentyl glycol [40 mol%], 16% by weight of a carboxylic acid-modified polyvinyl alcohol having a saponification degree of 74 to 80 mol%, 10% by weight of cross-linked acrylic resin particles having an average particle diameter of 30 nm, 10% by weight of N,N,N',N'-tetraglycidyl-m-xylylenediamine and 9% by weight of polyoxyethylene lauryl ether at a solid concentration of 4% by weight with a roll coater.

The resulting longitudinal oriented film coated with the coating liquid was then oriented at 95 °C and 4 times in the transverse direction while being dried and further heat-set at 230 °C to afford a biaxially oriented film having a thickness of 100 μm. The resulting film had a coating layer thickness of 0.03 μm, a surface energy of 60 dyne/cm and a heat shrinkage percentage of 0.9% in the machine direction and 0.2% in the transverse direction. Table 16 shows characteristics of the resulting film.

Comparative Example 29

Procedures were carried out in the same manner as in Example 58, except that the film was not coated with the aqueous liquid in Example 58. Table 16 shows characteristics of the resulting biaxially oriented polyester film.

Examples 59 to 67

Procedures were carried out in the same manner as in Example 58, except that the kind and ratio of the coating agent were changed as shown in Table 16 in Example 58. Table 16 shows characteristics of the resulting biaxially oriented polyester film.

As can be seen from the results shown in Table 16, the biaxially oriented polyester film of the present invention have excellent weatherability and adhesiveness and are useful as polyester films readily adhering to an ink-receiving layer.

Table 16

| | Composition for Coating Layer | | | | | | | | (5) | (6) | (7) | (8) |
|---|---|---|---|---|---|---|---|---|---|---|---|---|
| | (1) | | (2) | | (3) | | (4) | | | | | |
| | Kind | (9) | Kind | (9) | Kind | (9) | Kind | (9) | | | | |
| Ex. 58 | E-3 | 55 | P-3 | 16 | M-3 | 10 | T | 10 | A | A | A | 59 |
| Ex. 59 | E-3 | 65 | P-3 | 11 | M-3 | 10 | T | 5 | A | A | A | 57 |
| Ex. 60 | E-3 | 55 | Q-3 | 16 | M-3 | 10 | T | 10 | A | A | A | 57 |
| Ex. 61 | E-3 | 65 | Q-3 | 11 | M-3 | 10 | T | 5 | A | A | A | 56 |
| Ex. 62 | E-3 | 60 | P-3 | 16 | M-3 | 10 | U | 5 | A | A | A | 56 |
| Ex. 63 | E-3 | 60 | P-3 | 16 | M-3 | 10 | X | 5 | A | A | A | 59 |
| Ex. 64 | F-3 | 55 | P-3 | 16 | M-3 | 10 | T | 10 | A | A | A | 60 |
| Ex. 65 | F-3 | 65 | P-3 | 11 | M-3 | 10 | T | 5 | A | A | A | 57 |
| Ex. 66 | F-3 | 55 | Q-3 | 16 | M-3 | 10 | T | 10 | A | A | A | 58 |
| Ex. 67 | E-3 | 58 | P-3 | 11 | N-3 | 7 | T | 10 | A | A | A | 56 |
| (10) | - | | - | | - | | | | C | C | (11) | 46 |

Notes:
(1) means "(A) Copolyester".
(2) means "(B) Carboxylic Acid-modified PVA".
(3) means "(C) Fine Particles".
(4) means "(D) Cross-linking Agent".
(5) means "Adhesiveness".
(6) means "Water-resistant Adhesiveness".
(7) means "Weatherability"
(8) means "Surface Energy [dyne/cm]".
(9) means "[% by weight]".
(10) means "Comparative Example 29".
(11) means "Unevaluated".
Ex. means "Example".

In Table 16, the kinds E-3 and F-3 of the copolyester are the following copolymer polyesters:

E-3: a copolymer polyester (Tg = 30 °C) of terephthalic acid [60 mol%], isophthalic acid [36 mol%], 5-sodium sulfoisophthalic acid [4 mol%]/ethylene glycol [60 mol%] and neopentyl glycol [40 mol%]

F-3: a copolymer polyester (Tg = 42 °C ) of 2,6-naphthalenedicarboxylic acid [20 mol%], isophthalic acid [76 mol%], 5-potassium sulfoterephthalic acid [4 mol%]/ethylene glycol [50 mol%] and neopentyl glycol [50 mol%].

The kinds P-3, Q-3, R-3 and S-3 of the carboxylic acid-modified polyvinyl alcohol are the following compounds:

P-3: a carboxylic acid-modified polyvinyl alcohol having a saponification degree of 74 to 80 mol%
Q-3: a carboxylic acid-modified polyvinyl alcohol having a saponification degree of 85 to 90 mol%
R-3: a polyvinyl alcohol having a saponification degree of 76 to 82 mol%
S-3: a polyvinyl alcohol having a saponification degree of 86 to 89 mol%.

The kinds M-3 and N-3 of the fine particles are the following compounds:

M-3: cross-linked acrylic particles having an average particle diameter of 30 nm
N-3: colloidal silica particles having an average particle diameter of 30 nm.

The kinds T, U, X and Y of the cross-linking agent are the following compounds:

T: an epoxy resin; N,N,N',N'-tetraglycidyl-m-xylylenedaimine
U: a melamine resin; trimethoxymethylmelamine (trimethylolmelamine etherified with methanol)
X: a polymer having oxazoline groups; copolymer of 2-propenyloxazoline (60 mol%) and methyl methacrylate (40 mol%)
V: dimethylolethyleneurea.

Examples 68 to 71 and Comparative Examples 30 and 31

Biaxially oriented polyester films were obtained in the same manner as in Example 58, except that the kind of (A) the copolyester resin was changed as shown in Tables 17 and 18 and copolyester resins having a different Tg were used in Example 58. Table 17 shows characteristics of the resulting films.
As can be seen from the results shown in Table 17, the biaxially oriented polyester films of the present invention have excellent weatherability, blocking resistance and adhesiveness and are useful as polyester films readily adhering to an ink-receiving layer.

Table 17

| | (1) | (2) | (3) | (4) | (5) | (6) |
|---|---|---|---|---|---|---|
| Example 68 | G-3 | 24 | Fair | A | A | A |
| Example 69 | H-3 | 45 | Good | A | A | A |
| Example 70 | I-3 | 65 | Good | A | A | A |
| Example 71 | J-3 | 79 | Good | B | B | A |
| (7) | K-3 | 17 | Bad | A | A | A |
| (8) | L-3 | 98 | Good | C | C | A |

Notes:
(1)means "Kind of (A) Copolyester".
(2) means "Tg of (A) Copolyester [°C]".
(3) means "Blocking Tendency".
(4) means "Adhesiveness"
(5) means "Water-resistant Adhesiveness".
(6) means "Weatherability".
(7) means "Comparative Example 30".
(8) means "Comparative Example 31".

Table 18

| Copolymerization Component | | Copolymerization Composition of (A) Copolyester (Numerical Values Indicate mol%) | | | | | |
|---|---|---|---|---|---|---|---|
| | Kind of (A) | G-3 | H-3 | I-3 | J-3 | K-3 | L-3 |
| Terephthalic Acid | | 60 | 46 | 70 | | 16 | 19 |
| Isophthalic Acid | | 30 | 40 | 24 | 36 | 80 | |
| 2,6-Naphthalenedicarboxylic Acid | | | 10 | | 60 | | 77 |
| 5-Sodium Sulfoisophthalic Acid | | | 4 | 6 | 4 | 4 | 4 |
| 5-Potassium Sulfoisophthalic Acid | | 4 | | | | | |
| Ethylene Glycol | | 5 | 60 | 60 | 70 | | 90 |

Table 18 (continued)

| Copolymerization Component | | Copolymerization Composition of (A) Copolyester (Numerical Values Indicate mol%) | | | | | |
|---|---|---|---|---|---|---|---|
| | Kind of (A) | G-3 | H-3 | I-3 | J-3 | K-3 | L-3 |
| Diethylene Glycol | | 3 | 2 | 3 | | 5 | |
| 1,4-Butanediol | | 42 | 2 | | 10 | 60 | |
| Neopentyl Glycol | | 50 | 36 | 37 | 20 | 35 | 10 |

Examples 72 to 76 and Comparative Examples 32 and 33

Biaxially oriented polyester films were obtained in the same manner as in Example 58, except that the ratio of the dicarboxylic acid component containing the sulfonate group of (A) the copolyester resin was changed as shown in Table 19 in Example 58. Table 19 shows characteristics of the resulting films.

As can be seen from the results shown in Table 19, the coating agent of the present invention has excellent water dispersibility and the biaxially oriented polyester films of the present invention have excellent moisture resistance.

Table 19

| | Ratio of Dicarboxylic Acid of (A) Copolyester [mol%] | | | (1) | (2) | (3) |
|---|---|---|---|---|---|---|
| | (4) | (5) | (6) | | | |
| Ex. 72 | 1 | 60 | 39 | Fair | Good | A |
| Ex. 73 | 2 | 60 | 38 | Good | Good | A |
| Ex. 74 | 6 | 60 | 34 | Good | Good | A |
| Ex. 75 | 12 | 60 | 28 | Good | Good | A |
| Ex. 76 | 16 | 60 | 24 | Good | Fair | A |
| (7) | 0 | 60 | 40 | Bad | Good | (9) |
| (8) | 20 | 60 | 20 | Good | Bad | (9) |

Notes:
(1) means "Water Dispersibility".
(2) means "Moisture Resistance".
(3) means "Weatherability".
(4) means "5-Sodium Sulfoisophthalic Acid".
(5) means "Terephthalic Acid".
(6) means "Isophthalic Acid".
(7) means "Comparative Example 32".
(8) means "Comparative Example 33".
(9) means "Unevaluated".
Ex. means "Example".

Examples 77 to 79 and Comparative Examples 34 to 39

Biaxially obtained polyester films were obtained in the same manner as in Example 58, except that the ratios of (A) the copolyester resin, (B) the carboxylic acid-modified polyvinyl alcohol, (C) the fine particles and (D) the cross-linking agent were changed as shown in Table 20 in Example 58. Table 20 shows characteristics of the resulting films.

As can be seen from Table 20, the biaxially oriented polyester films of the present invention have excellent adhesiveness, transportability and weatherability.

Table 20

| | Composition for Coating Layer | | | | | | | | (5) | (6) | (7) | (8) | (9) |
|---|---|---|---|---|---|---|---|---|---|---|---|---|---|
| | (1) | | (2) | | (3) | | (4) | | | | | | |
| | Kind | (10) | Kind | (10) | Kind | (10) | Kind | (10) | | | | | |
| Ex. 77 | H-3 | 45 | P-3 | 26 | M-3 | 10 | T | 10 | A | A | A | 0.35 | 64 |
| Ex. 78 | H-3 | 51 | P-3 | 20 | M-3 | 10 | T | 10 | A | A | A | 0.33 | 61 |
| Ex. 79 | H-3 | 60 | P-3 | 11 | M-3 | 10 | T | 10 | A | A | A | 0.41 | 57 |
| (11) | H-3 | 40 | P-3 | 40 | M-3 | 10 | T | 10 | B | B | A | 0.69 | 69 |
| (12) | H-3 | 69 | P-3 | 2 | M-3 | 10 | T | 10 | C | C | A | 0.34 | 52 |
| (13) | H-3 | 21 | P-3 | 50 | M-3 | 10 | T | 10 | C | C | A | 0.63 | 68 |
| (14) | H-3 | 64 | P-3 | 7 | M-3 | 10 | T | 10 | C | C | A | 0.35 | 54 |
| (15) | H-3 | 51 | R-3 | 20 | M-3 | 10 | T | 10 | A | C | A | 0.35 | 69 |
| (16) | H-3 | 51 | S-3 | 20 | M-3 | 10 | T | 10 | A | C | A | 0.33 | 54 |

Notes:
(1) means "(A) Copolyester".
(2) means "(B) Carboxylic Acid-modified PVA".
(3) means "(C) Fine Particles".
(4) means "(D) Cross-linking Agent".
(5) means "Adhesiveness".
(6) means "Water-resistant Adhesiveness".
(7) means "Weatherability".
(8) means "Coefficient of Friction".
(9) means "Surface Energy [dyne/cm]".
(10) means "[% by weight]".
(11) means "Comparative Example 34".
(12) means "Comparative Example 35".
(13) means "Comparative Example 36".
(14) means "Comparative Example 37".
(15) means "Comparative Example 38".
(16) means "Comparative Example 39".
Ex. means "Example".

Examples 80 and 81 and Comparative Examples 40 and 41

Biaxially oriented polyester films were obtained in the same manner as in Example 58, except that the particle diameter of (C) the fine particles was changed as shown in Table 21 in Example 58. Table 21 shows characteristics of the resulting films.

As can be seen from the results shown in Table 21, the biaxially oriented polyester films of the present invention have excellent blocking resistance.

Table 21

| | Average Particle Diameter of (C) Fine Particles [nm] | Blocking Tendency |
|---|---|---|
| Example 80 | 20 | Fair |
| Example 81 | 80 | Good |
| Comparative Example 40 | 10 | Bad |

Table 21 (continued)

| | Average Particle Diameter of (C) Fine Particles [nm] | Blocking Tendency |
|---|---|---|
| Comparative Example 41 | 130 | Good |

Examples 82 and 83 and Comparative Examples 42 and 43

Biaxially oriented polyester films were obtained in the same manner as in Example 58, except that the ratios of (A) the copolyester resin, (B) the carboxylic acid-modified polyvinyl alcohol, (C) the fine particles and (D) the cross-linking agent were changed as shown in Table 22 in Example 58. Table 22 shows characteristics of the resulting films.

As can be seen from Table 22, the biaxially oriented polyester films of the present invention have excellent adhesiveness and transportability.

Table 22

| | (A) Copolyester | | (B) Water-soluble Polymer | | (C) Fine Particles | | (1) | (2) | (3) |
|---|---|---|---|---|---|---|---|---|---|
| | Kind | (4) | Kind | (4) | Kind | (4) | | | |
| Ex. 82 | H-3 | 72 | P-3 | 16 | M-3 | 3 | A | A | 0.41 |
| Ex. 83 | H-3 | 55 | P-3 | 16 | M-3 | 20 | B | A | 0.32 |
| (5) | H-3 | 74 | P-3 | 16 | M-3 | 1 | A | A | 0.65 |
| (6) | H-3 | 48 | P-3 | 16 | M-3 | 27 | C | A | 0.33 |

Notes:
(1) means "Adhesiveness".
(2) means "Weatherability".
(3) means "Coefficient of Friction [μ s].
(4) means "[% by weight]".
(5) means "Comparative Example 42".
(6) means "Comparative Example 43".
Ex. means "Example".

Examples 84 to 86 and Comparative Examples 44 to 46

Biaxially oriented polyester films were obtained in the same manner as in Example 58, except that the ratios of (A) the copolyester resin, (B) the carboxylic acid-modified polyvinyl alcohol, (C) the fine particles and (D) the cross-linking agent were changed as shown in Table 23 in Example 58. Table 23 shows characteristics of the resulting films.

As can be seen from Table 23, the biaxially oriented polyester films of the present invention have excellent adhesiveness and transportability.

Table 23

| | Composition for Coating Layer | | | | | | | | (5) | (6) | (7) | (8) |
|---|---|---|---|---|---|---|---|---|---|---|---|---|
| | (1) | | (2) | | (3) | | (4) | | | | | |
| | Kind | (9) | Kind | (9) | Kind | (9) | Kind | (9) | | | | |
| Ex. 84 | E-3 | 64 | P-3 | 16 | M-3 | 10 | T | 1 | A | A | A | 60 |
| Ex. 85 | E-3 | 56 | P-3 | 16 | M-3 | 10 | T | 9 | A | A | A | 57 |
| Ex. 86 | E-3 | 45 | P-3 | 16 | M-3 | 10 | T | 20 | A | A | A | 56 |
| (10) | E-3 | 65 | P-3 | 16 | M-3 | 10 | - | - | B | C | A | 61 |
| (11) | E-3 | 35 | P-3 | 16 | M-3 | 10 | T | 30 | B | C | A | 56 |
| (12) | E-3 | 25 | P-3 | 16 | M-3 | 10 | T | 40 | B | C | A | 55 |

Notes:
(1) means "(A) Copolyester".
(2) means "(B) Carboxylic Acid-modified PVA".
(3) means "(C) Fine Particles".
(4) means "(D) Cross-linking Agent".
(5) means "Adhesiveness".
(6) means "Water-resistant Adhesiveness".
(7) means "Weatherability".
(8) means "Surface Energy [dyne/cm]".
(9) means "[% by weight]".
(10) means "Comparative Example 44".
(11) means "Comparative Example 45".
(12) means "Comparative Example 46".
Ex. means "Example".

Examples 87 and 88

Biaxially oriented polyester films were obtained in the same manner as in Example 58, except that the ultraviolet light absorber contained in the polyester was changed as follows in Example 58.

Example 87: containing 1% by weight of the ultraviolet light absorber represented by the following formula (B) :
Example 88: containing 1% by weight of the ultraviolet light absorber represented by the structural formula (C) :

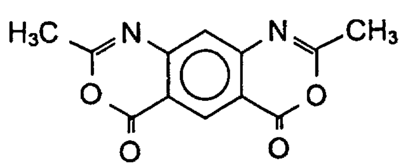

...... (B)

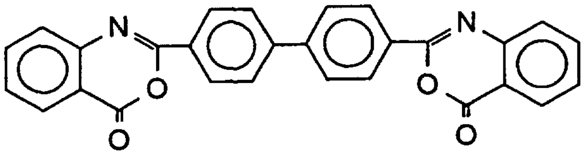

...... (C)

As a result of weatherability tests carried out by using the films, the results of the weatherability tests were excellent and rank A in the case of Examples 87 and 88.

Effects of the Invention

The polyester adhesive film readily adhering to an ink-receiving layer of the present invention has excellent transparency and weatherability and further excellent adhesiveness to an aqueous ink-receiving layer for ink jet printers and are useful as image-receiving paper for the ink jet printers.

## Claims

1. A polyester adhesive film readily adhering to an ink-receiving layer comprising a coating layer having a surface energy of 50 to 70 dyne/cm and a polyester film containing an ultraviolet light absorber, wherein at least one surface of the polyester film is coated with the coating layer.

2. The polyester adhesive film readily adhering to an ink-receiving layer according to claim 1, wherein the coating layer of the polyester adhesive film is composed of a composition comprising, per 100% by weight of the composition, (B) 10 to 30% by weight of (B1) a polyvinyl alcohol and/or (B2) a polyalkylene oxide having a number-average molecular weight of 600 to 2000 and (C) 3 to 25% by weight of fine particles having an average particle diameter of 20 to 80 nm.

3. The polyester adhesive film readily adhering to an ink-receiving layer according to claim 2, wherein the coating layer of the polyester adhesive film comprises, per 100% by weight of the composition, (A) 50 to 80% by weight of a copolyester in which the ratio of a dicarboxylic acid component having a sulfonate group is 1 to 16 mol% based on the whole acid component and the second order transition point of the polymer is 20 to 90 °C.

4. The polyester adhesive film readily adhering to an ink-receiving layer according to claim 2, wherein the coating layer of the polyester adhesive film comprises, per 100% by weight of the composition, (D) 1 to 20% by weight of a cross-linking agent.

5. The polyester adhesive film readily adhering to an ink-receiving layer according to claim 2, wherein a cross-linking agent (D) is at least one kind selected from the group consisting of oxazoline group-containing polymers, urea resins, melamine resins and epoxy resins.

6. The polyester adhesive film readily adhering to an ink-receiving layer according to claim 1, wherein the surface energy of the coating layer is 54 to 70 dyne/cm.

7. The polyester adhesive film readily adhering to an ink-receiving layer according to claim 2, wherein the saponification degree of the polyvinyl alcohol (B1) is 74 to 90 mol%.

8. The polyester adhesive film readily adhering to an ink-receiving layer according to claim 7, wherein the polyvinyl alcohol (B1) is modified with a carboxylic acid.

9. The polyester adhesive film readily adhering to an ink-receiving layer according to claim 1, wherein the haze is less than 5%.

10. The polyester adhesive film readily adhering to an ink-receiving layer according to claim 1, wherein the center line

average height Ra of the surface of the coating layer is within the range of 2 to 40 nm.

**11.** The polyester adhesive film readily adhering to an ink-receiving layer according to claim 1, wherein the ultraviolet light absorber is at least one kind of compound selected from a cyclic iminoester represented by the following formula (I):

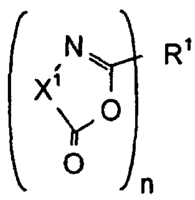

• • • (I)

wherein, $X^1$ is a bivalent aromatic residue in which two bonds from $X^1$ represented by the above formula are in a positional relationship of the 1-and the 2-positions; n is 1, 2 or 3; $R^1$ is an n-valent hydrocarbon residue and may further contain a heteroatom or $R^1$ may be a direct bond linkage when n is 2, and
a cyclic iminoester represented by the following formula (II):

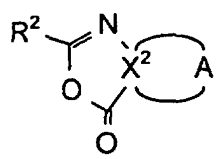

• • • (II)

wherein, A is a group represented by the following formula (II)-a:

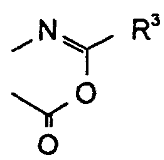

• • • (II) -a

or a group represented by the following formula (II)-b:

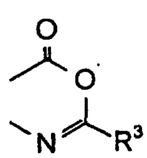

• • • (II) -b

wherein $R^2$ and $R^3$ are the same or different and are each a monovalent hydrocarbon residue; and $X^2$ is a tetravalent aromatic residue which may further contain a heteroatom.

**12.** The polyester adhesive film readily adhering to an ink-receiving layer according to claim 1, which is used as image-receiving paper for ink jet printers.

## INTERNATIONAL SEARCH REPORT

International application No.
PCT/JP02/09028

A. CLASSIFICATION OF SUBJECT MATTER
Int.Cl[7] C08J7/04, B32B27/36, B41M5/00

According to International Patent Classification (IPC) or to both national classification and IPC

B. FIELDS SEARCHED

Minimum documentation searched (classification system followed by classification symbols)
Int.Cl[7] C08J7/04-7/06, B32B27/00-27/42, B41M5/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-37835 A (Teijin Ltd.), 08 February, 2000 (08.02.00), Claims; Par. No. [0019] (Family: none) | 1-3,6,12<br>4,5,7-11 |
| Y | JP 2000-336309 A (Teijin Ltd.), 05 December, 2000 (05.12.00), Claims; Par. Nos. [0016] to [0017] & EP 1114733 A & WO 00/73081 A | 1-12 |
| Y | JP 2000-336308 A (Teijin Ltd.), 05 December, 2000 (05 12 00), Claims; Par. No. [0013] (Family: none) | 1-12 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 October, 2002 (17.10.02) | 05 November, 2002 (05.11.02) |
| Name and mailing address of the ISA/<br>Japanese Patent Office<br>Facsimile No. | Authorized officer<br><br>Telephone No. |

Form PCT/ISA/210 (second sheet) (July 1998)

International application No.
PCT/JP02/09028

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-335090 A (Teijin Ltd.), 05 December, 2000 (05.12.00), Claims (Family: none) | 1-12 |
| Y | JP 2001-150802 A (Teijin Ltd.), 05 June, 2001 (05.06.01), Claims (Family: none) | 1-12 |
| Y | JP 2001-150620 A (Teijin Ltd.), 05 June, 2001 (05.06.01), Claims (Family: none) | 1-12 |
| Y | JP 2000-272222 A (Toyobo Co., Ltd.), 03 October, 2000 (03.10.00), Claims; Par. Nos. [0011] to [0034] (Family: none) | 1-12 |
| Y | JP 5-50740 A (Toray Industries, Inc.), 02 March, 1993 (02.03.93), Claims; Par. No. [0010] (Family: none) | 1-12 |
| Y | EP 993965 A (NIPPON SEISHI Kabushiki Kaisha), 19 April, 2000 (19.04.00), Claims & JP 2000-185472 A & US 6440897 B | 11 |
| A | JP 7-287347 A (Teijin Ltd.), 31 October, 1995 (31.10.95), Claims (Family: none) | 1-12 |

Form PCT/ISA/210 (continuation of second sheet) (July 1998)